(19) Europäisches Patentamt
European Patent Office
Office européen des brevets

(11) EP 2 783 241 B1

(12) FASCICULE DE BREVET EUROPEEN

(45) Date de publication et mention de la délivrance du brevet:
**09.03.2016 Bulletin 2016/10**

(21) Numéro de dépôt: **12788596.0**

(22) Date de dépôt: **23.11.2012**

(51) Int Cl.:
***G01T 1/17*** *(2006.01)* ***G01T 1/20*** *(2006.01)*

(86) Numéro de dépôt international:
**PCT/EP2012/073531**

(87) Numéro de publication internationale:
**WO 2013/076279 (30.05.2013 Gazette 2013/22)**

# (54) PROCEDE DE TRAITEMENT DE SIGNAL ISSU D'UN SCINTILLATEUR PHOSWICH ET DETECTEUR A SCINTILLATION ASSOCIE

VERFAHREN ZUR VERARBEITUNG EINES SIGNALS AUS EINEM PHOSWICH-SZINTILLATOR UND ZUGEHÖRIGER SZINTILLATIONSDETEKTOR

METHOD FOR PROCESSING A SIGNAL FROM A PHOSWICH SCINTILLATOR, AND ASSOCIATED SCINTILLATION DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.11.2011 FR 1160804**

(43) Date de publication de la demande:
**01.10.2014 Bulletin 2014/40**

(73) Titulaire: **Commissariat à l'Énergie Atomique et aux Énergies Alternatives**
**75015 Paris (FR)**

(72) Inventeurs:
- **KONDRASOVS, Vladimir**
  **F-91120 Palaiseau (FR)**
- **NORMAND, Stéphane**
  **F-50540 Isigny Le Buat (FR)**
- **BOUDERGUI, Karim**
  **F-28630 Nogent Le Phaye (FR)**
- **HAMEL, Matthieu**
  **F-50100 Cherbourg-Octeville (FR)**
- **PITTANCE, Chrystèle**
  **F-78130 Maurepas (FR)**
- **ROCHA, Licinio**
  **F-92000 Nanterre (FR)**
- **TROCME, Mathieu**
  **F-75012 Paris (FR)**

(74) Mandataire: **Ahner, Philippe et al**
**BREVALEX**
**95, rue d'Amsterdam**
**75378 Paris Cedex 8 (FR)**

(56) Documents cités:
**US-A- 5 399 869** **US-A- 5 514 870**
**US-A1- 2009 039 271**

- **YOUSEFI S ET AL: "A wavelet-based pulse shape discrimination method for simultaneous beta and gamma spectroscopy", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 599, no. 1, 1 février 2009 (2009-02-01), pages 66-73, XP025950409, ISSN: 0168-9002, DOI: 10.1016/J.NIMA.2008.10.026 [extrait le 2008-11-05]**
- **TAKADA M ET AL: "Characteristics of a phoswich detector to measure the neutron spectrum in a mixed field of neutrons and charged particles", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 476, no. 1-2, 1 janvier 2002 (2002-01-01), pages 332-336, XP027303235, ISSN: 0168-9002 [extrait le 2002-01-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 783 241 B1

## Description

Domaine technique et art antérieur

L'invention concerne un procédé de traitement de signal issu d'un scintillateur en sandwich plus communément appelé scintillateur phoswich (le terme « phoswich » étant une contraction de l'anglais pour « phosphor sandwich »). L'invention concerne également un détecteur à scintillation comprenant un scintillateur phoswich et un circuit de traitement apte à mettre en oeuvre le procédé de traitement de signal de l'invention.

Les détecteurs à scintillation sont utilisés dans les systèmes de mesure pour la détection des rayonnements ionisants. Ils permettent de détecter la présence de sources radioactives à la surface ou à l'intérieur d'objets ou de personnes. Ils ont pour but d'identifier de manière quantitative la nature des rayonnements détectés (particules $\beta$, électrons de conversion interne, photons $\gamma$, photons X, photons de freinage, etc.). Ils comprennent à cette fin des moyens aptes à discriminer les particules détectées.

Parmi les détecteurs à scintillation, les détecteurs à scintillation qui comprennent un scintillateur « phoswich » sont choisis pour leurs propriétés de scintillation différentes, généralement le temps de décroissance. Le signal lumineux émis par un détecteur phoswich comme suite à la détection d'une particule ionisante est caractéristique du détecteur. Une analyse de forme du signal lumineux total recueilli permet alors de remonter à la région, ou aux régions, d'interaction. Ceci est généralement mis à profit de deux façons :

- dans le domaine de la radioprotection et de la dosimétrie basse énergie (chaque scintillateur est alors optimisé en épaisseur et en composition pour ne détecter qu'un seul type de particule, permettant ainsi de les discriminer), et
- dans le domaine de la recherche fondamentale (lorsque la particule incidente est un ion, un montage de type télescope permet alors de distinguer isotopiquement deux ions incidents).

La figure 1 représente une vue en coupe transversale d'un scintillateur « phoswich » de l'art antérieur équipé d'un photomultiplicateur tel que décrit dans le brevet US 5 514 870.

Le scintillateur « phoswich » comprend un scintillateur plastique de faible épaisseur 1 et un cristal scintillateur épais 2. Le scintillateur plastique 1 et le cristal scintillateur 2 sont fixés l'un à l'autre à l'aide d'un ciment optique 5 et inserrés dans une enveloppe 8. Un photomultiplicateur 3 est fixé sur le cristal scintillateur 2 à l'aide d'un ciment optique 6. Une fine couche métallique 4 recouvre la face du scintillateur plastique 1 sur laquelle le rayonnement R à détecter est incident. Dans la suite de la description, le scintillateur plastique 1 sur lequel le rayonnement R est incident sera également appelé « scintillateur amont » et le cristal scintillateur 2 « scintillateur aval ». Les parois latérales du cristal scintillateur 2 sont recouvertes d'un réflecteur de lumière 7.

La figure 2 est un graphique bi-dimmentionnel qui illustre la détection de particules à l'aide d'un détecteur à scintillation qui utilise un scintillateur conforme à la figure 1.

Le graphique de la figure 2 résulte de la mise en oeuvre d'un algorithme de traitement qui intègre simultanément les électrons détectés par le photomultiplicateur 3 dans deux fenêtres temporelles différentes, à savoir une fenêtre temporelle courte (typiquement 10ns) et une fenêtre temporelle longue typiquement 40ns). Les données qui résultent de cette intégration sont ensuite quantifiées et reportées dans un espace bi-dimentionnel (X, Y) où l'abscisse X correspond à la fenêtre temporelle longue et l'ordonnée Y à la fenêtre temporelle courte.

Quatre zones se dessinent alors dans le plan (X, Y), à savoir une zone $z_A$ qui correspond aux radiations alpha, une zone $z_B$ qui correspond aux radiations gamma et aux neutrons, une zone $z_C$ qui correspond aux particules béta qui interagissent dans le seul scintillateur amont (scintillateur plastique) et une zone $z_D$ qui correspond aux particules béta qui intéragissent à la fois dans le scintillateur amont et le scintillateur aval (cristal scintillateur).

Il apparaît sur la figure 2 que les zones $z_C$ et $z_D$ sont mitoyennes et qu'elles présentent - de fait - une zone de recouvrement dans laquelle il n'est pas possible d'identifier clairement l'origine des particules béta. Ceci présente un inconvénient.

L'invention ne présente pas cet inconvénient. La publication de Yousefi S. et al. "A wavelet-based pulse shape discrimination method for simultaneous beta and gamma spectroscopy", Nuclear Instruments and Methods in Physics Research, Section A, 559(1), pp. 66-73 (2009) divulgue un procédé de traitement de signaux électriques issus d'un scintillateur phoswich comprenant un scintillateur amont (BC-400) et un scintillateur aval (NaI(TI)), caractérisé en ce qu'il comprend, pour chaque signal électrique : une numérisation du signal électrique, une détermination d'une amplitude A et d'une surface intégrale S du signal électrique numérisé, un affichage de première et deuxième données dans un repère orthonormé, et une délimitation d'une zone d'intérêt d'événements par sélection, parmi les événements répartis dans le repère orthonormé, des événements qui sont contenus dans une zone de calibration définie suite à la détection de particules lors d'une étape de calibration préliminaire.

Exposé de l'invention

En effet l'invention concerne un procédé de traitement de signaux électriques issus d'un scintillateur phoswich comprenant un scintillateur amont et un scintillateur aval, caractérisé en ce qu'il comprend, pour chaque signal électrique :

- une numérisation du signal électrique,
- une détermination d'une amplitude A et d'une surface intégrale S du signal électrique numérisé,
- un calcul d'une première donnée $S_1$ et d'une deuxième donnée $S_2$ à l'aide des équations respectives suivantes:

$$S_1 = [\tau_1/(\tau_2-\tau_1)][A\ (\tau_2/\tau_0) - S],$$

et

$$S_2 = [\tau_2/(\tau_2-\tau_1)][S - A\ (\tau_1/\tau_0)],$$

où :

→ $\tau_1$ est une constante de décroissance de signal caractéristique d'une détection de particule dans le scintillateur amont;
→ $\tau_2$ est une constante de décroissance de signal caractéristique d'une détection de particule dans le scintillateur aval;
→ $\tau_0$ est une constante d'intégration choisie pour la mesure de la surface intégrale S,

- un affichage des première et deuxième donnée $S_1$, $S_2$ dans un repère orthonormé (S1, S2), la première donnée $S_1$ étant positionnée selon l'axe $S_1$ et la deuxième donnée $S_2$ étant positionnée selon l'axe S2 de sorte que les première et deuxième données associées à un même signal électrique correspondant à un même événement,
- une délimitation d'une zone d'intérêt d'événements par sélection, parmi les événements répartis dans le repère (S1, S2), des événements qui sont contenus dans une zone de calibration définie comme suite à la détection de particules $\beta$ lors d'une étape de calibration préliminaire.

Selon une caractéristique supplémentaire du procédé de l'invention, l'étape de délimitation de la zone d'intérêt est suivie d'une étape de comptage des événements dans la zone d'intérêt.
Selon une autre caractéristique supplémentaire du procédé de l'invention, une mesure préliminaire de bruit correspondant à la détection de particules $\gamma$ issues du bruit ambiant conduit à un comptage d'événements de bruit dans la zone de calibration et le comptage des événements de bruit est soustrait des événements comptés dans la zone d'intérêt.
L'invention concerne également un détecteur à scintillation comprenant un scintillateur phoswich et un circuit de traitement apte à mettre en oeuvre le procédé de traitement de signaux électriques de l'invention.
Grâce au procédé de traitement de l'invention, le détecteur à scintillation de l'invention détecte avantageusement des particules $\beta$ en champ mixte $\beta$, $\gamma$, dans de fortes ambiances $\gamma$.

Brève description des figures

D'autres caractéristiques et avantages de l'invention apparaîtront à la lecture d'un mode de réalisation préférentiel, fait en référence aux figures jointes, parmi lesquelles :

- La figure 1 représente une vue en coupe transversale d'un scintillateur phoswich de l'art antérieur équipé d'un photomultiplicateur ;
- La figure 2 est un graphique bi-dimmentionnel qui illustre la détection de radiations à l'aide d'un scintillateur conforme à la figure 1 ;
- La figure 3 illustre, à des fins didactiques, des événements qui produisent des photons de scintillation dans un scintillateur phoswich ;
- La figure 4 représente un schéma de principe de détecteur à scintillation selon l'invention ;
- Les figures 5A-5C représentent des exemples de signaux détectés par le détecteur à scintillation de l'invention ;
- La figure 6 représente un organigramme de l'algorithme de traitement de l'invention ;

- La figure 7 représente, à titre d'exemple, une distribution des événements dans un espace bi-dimentionel, obtenue à l'aide de l'algorithme de traitement de l'invention représenté en figure 6 ;
- La figure 8 illustre l'obtention de données de calibration qui participent à la mise en oeuvre de l'algorithme de traitement de l'invention ;
- La figure 9 représente un scintillateur phoswich apte à réaliser un détecteur à scintillation selon le mode de réalisation préférentiel de l'invention ;

Sur toutes les figures, les mêmes références désignent les mêmes éléments.

Description détaillée d'un mode de réalisation préférentiel de l'invention

La figure 3 illustre, à des fins didactiques, pour une meilleure compréhension de l'invention, les événements qui produisent des photons de scintillation dans un scintillateur phoswich.

Les particules incidentes qui produisent des photons de scintillation aptes à atteindre le photomultiplicateur sont :

- des particules $\beta$ qui interagissent le long d'une trajectoire T12 située dans les scintillateurs amont 1 et aval 2 (référencées $\beta 12$ sur la figure 3) ;
- des particules $\beta$ qui interagissent le long d'une trajectoire T1 située dans le seul scintillateur amont 1 (référencées $\beta 1$ sur la figure 3),
- des photons $\gamma 1$ qui interagissent uniquement dans le scintillateur amont,
- des photons $\gamma 2$ qui interagissent uniquement dans le scintillateur aval,
- des photons $\gamma 12$ qui interagissent d'abord dans le scintillateur amont, puis dans le scintillateur aval.

De façon particulièrement avantageuse, ce sont les photons lumineux produits par les interactions des particules $\beta 12$ qui sont discriminés des photons $\gamma 1$ et $\gamma 2$ par le détecteur à scintillation de l'invention.

La figure 4 représente un schéma de principe de détecteur à scintillation de l'invention.

Le détecteur à scintillation comprend un scintillateur SC muni d'un photomultiplicateur PM, un convertisseur analogique/numérique CAN et un calculateur K muni d'un écran d'affichage E. Le scintillateur SC est un scintillateur phoswich qui comprend un scintillateur plastique et un cristal détecteur. De façon connue en soi, le photomultiplicateur PM est relié à une haute tension HT. Le signal S(t) délivré par le photomultiplicateur PM est numérisé par le convertisseur analogique/numérique CAN qui délivre un signal numérique $S_N(t)$. Le signal numérique $S_N(t)$ est traité, dans le calculateur K, par le procédé de traitememt de l'invention. Le résultat du traitement s'affiche, par exemple, sur l'écran d'affichage E.

Les figures 5A-5C représentent le signal de détection dans trois situations différentes :

- La figure 5A représente le signal numérique $S_{N1}(t)$ qui résulte de la détection d'une particule dans le seul scintillateur amont (en référence à la figure 3, ce sont le particules $\gamma 1$ et les particules $\beta 1$ sur la trajectoire T1) ;
- La figure 5B représente le signal numérique $S_{N2}(t)$ qui résulte de la détection d'une particule dans le seul scintillateur aval (en référence à la figure 3, ce sont les particules $\gamma 2$) ;
- La figure 5C représente le signal numérique $S_{N3}(t)$ qui résulte de la détection d'une particule dans le scintillateur amont et dans le scintillateur aval (en référence à la figure 3, ce sont les particules $\gamma 12$ et particules $\beta 12$).

Le signal $S_{N1}(t)$ est de durée courte. Le signal $S_{N2}(t)$ est, comparativement au signal $S_{N1}(t)$, de durée longue. Le signal $S_{N3}(t)$ est une superposition de signaux $S_{N1}(t)$ et $S_{N2}(t)$. Les propriétés temporelles de ces signaux sont liées aux propriétés physiques intrinsèques des deux scintillateurs qui constituent le scintillateur phoswich SC.

Comme cela a déjà été mentionné précédemment, ce sont les photons lumineux produits par les interactions des particules $\beta 12$ dans le scintillateur qui sont à discriminer de l'ensemble des photons lumineux produits par les particules $\gamma 1$, $\gamma 2$, $\gamma 12$ et $\beta 1$.

La figure 6 illustre l'organigramme de l'algorithme de traitement de l'invention qui est mis en oeuvre à cette fin.

L'algorithme de traitement comprend tout d'abord une étape E1 de mesure de l'amplitude A et de la surface intégrale S de chaque signal numérique détecté $S_N(t)$. L'amplitude A est, par définition, la valeur maximale du signal $S_N(t)$ et la surface intégrale S est, par définition, la grandeur telle que :

$$S = (1/\tau_0)\int_0^t S_N(\tau)\, d\tau,$$

où $\tau_0$ est une constante d'intégration déterminée, de façon connue en soi, lors d'une étape de calibration. La constante d'intégration $\tau_0$ peut être, par exemple, égale à 1.

A l'étape E1 succède une étape E2 de calcul, pour chaque signal numérique détecté, des données $S_1$ et $S_2$ telles que :

$$S_1 = [\tau_1/(\tau_2-\tau_1)][A\ (\tau_2/\tau_0) - S],$$

et

$$S_2 = [\tau_2/(\tau_2-\tau_1)][S - A\ (\tau_1/\tau_0)],$$

où :

→ $\tau_1$ est la constante de décroissance d'un signal issu de la détection d'une particule dans le scintillateur amont (grandeur connue caractéristique du scintillateur amont) ;
→ $\tau_2$ est la constante de décroissance d'un signal issu de la détection d'une particule dans le scintillateur aval (grandeur connue caractéristique du scintillateur aval) ;
→ $\tau_0$ est la constante d'intégration mentionnée ci-dessus.

A l'étape E2 succède une étape E3 de distribution des événements dans le repère (S1, S2).
A titre d'exemple non limitatif, la figure 7 illustre une distribution des événements dans le repère (S1, S2). Quatre zones Z1-Z4 apparaîssent sur la figure 7. Ces quatre zones permettent avantageusement de réaliser la discrimination souhaitée. En effet :

- les événements associés aux particules $\gamma$1 et $\beta$1 définissent une zone Z1 qui est positionnée sensiblement selon l'axe S1;
- les événements associés aux particules $\gamma$2 définissent une zone Z2 qui est positionnée sensiblement selon l'axe S2;
- les événements associés aux particules $\gamma$12 définissent une zone Z3 qui est distribuée dans l'ensemble du repère (S1, S2);
- les événements associés aux particules $\beta$12 définissent une zone Z4 qui est distribuée, dans le repère (S1, S2), sous la forme d'une bande dont une extrémité est en contact avec l'axe S1.

La zone d'intérêt est la zone Z4. De façon avantageuse, il peut être constaté que la zone Z4 se distingue très clairement de la zone Z1, permettant ainsi une très bonne discrimination entre les particules $\beta$1 et $\beta$12. Toutefois, il faut également constater que la zone Z4 se situe en grande partie à l'intérieur de la zone Z3. Il est en conséquence nécessaire, d'une part, de délimiter clairement la zone Z4 par rapport à la zone Z3 et, d'autre part, de supprimer les événements de la zone Z3 qui sont présents dans la zone Z4 (bruit).
A l'étape E3 de distribution des événements dans le repère (S1, S2) succède ainsi une étape E4 de délimitation de la zone Z4. La délimitation de la zone Z4 s'opère par la sélection, parmi les événements répartis dans le repère (S1, S2), des événements qui sont contenus dans une zone de calibration $Z_{CAL}$ définie suite à la détection de particules $\beta$ lors d'une étape de calibration préliminaire.
La figure 8 illustre, à titre d'exemple non limitatif, une détermination de la zone de calibration $Z_{CAL}$.
Lors de l'étape de calibration préliminaire, le détecteur à scintillation de l'invention (scintillateur phoswich + circuit de traitement qui met en oeuvre le procédé de l'invention) est utilisé pour détecter des signaux issus de sources $\beta$ pures de différentes énergies. Les événements détectés se répartissent alors dans le repère (S1, S2) de part et d'autre d'une zone de forte concentration d'événements qui dessine une courbe M. On choisit alors un nombre N de points $P_i$ sur cette courbe M, chaque point $P_i$ correspondant à un couple de données ($S_{1i}$, $S_{2i}$). Le nombre N est choisi suffisamment grand pour que l'ensemble des points $P_i$ dessinent une courbe sensiblement représentative de la courbe M. Pour chaque point $P_i$ choisi, on définit alors la tangente $TA_i$ à la courbe M, puis la droite $PE_i$ qui est perpendiculaire à la tangente $TA_i$ au point $P_i$. Le nombre d'événements qui sont situés sur la droite $PE_i$ diminue de part et d'autre du point $P_i$. Les deux points qui délimitent la zone $Z_{CAL}$, sur la droite $PE_i$, de part et d'autre du point $P_i$, sont alors choisis comme étant ceux pour lesquels le nombre d'événements est égal à x% du nombre d'événements situés au point $P_i$, par exemple 5%. Ce calcul est mis en oeuvre pour chacun des points $P_i$ et la zone de calibration $Z_{CAL}$ se déduit alors de l'ensemble de couples de points obtenus comme indiqué ci-dessus à partir de chaque point $P_i$.
A l'étape E4 de délimitation de la zone d'intérêt succède alors l'étape E5 de comptage des événements détectés dans la zone Z4. Telle quelle, l'étape de comptage E5 conduit à compter les événements utiles (détection des $\beta$12) et des événements non utiles (détection des $\gamma$12). Selon le mode de réalisation préférentiel de l'invention, les événements

non utiles sont supprimés. A cette fin, lors d'une étape de calibration supplémentaire, les événements de bruit B qui sont associés à la détection de particules y dans la zone de calibration $Z_{CAL}$ sont comptés. A l'étape E5 de comptage de l'ensemble des événements détectés dans la zone Z4 succède alors une étape E6 de détermination des seuls événements utiles par soustraction des événements de bruit B de l'ensemble des événements comptés issus de l'étape E5.

Le procédé de traitement de signaux de l'invention est particulièrement bien adapté à la détection de signaux issus de tout type de scintillateur phoswich. Cependant, la structure connue de scintillateur phoswich mentionnée ci-dessus présente un inconvénient. En effet, le ciment optique qui lie les scintillateurs amont et aval constitue une zone morte pour la détection des particules, limitant ainsi la sensibilité de détection.

C'est la raison pour laquelle la Demanderesse propose également, dans le cadre de la présente invention, un détecteur à scintillation dans lequel le scintillateur phoswich ne comprend pas de ciment optique entre les scintillateurs amont et aval. La figure 9 illustre un exemple particulièrement avantageux de ce nouveau scintillateur phoswich.

Le scintillateur phoswich représenté en figure 9 comprend un premier scintillateur organique 9 et un deuxième scintillateur organique 10. Un photodétecteur 11, par exemple un photomultiplicateur ou une photodiode, est fixé sur le scintillateur organique 10. De même que précédemment, dans la suite de la description, le premier scintillateur est également appelé « scintillateur amont » et le deuxième scintillateur « scintillateur aval », en référence au sens de propagation des particules incidentes sur le détecteur. Le premier scintillateur organique 9 a une épaisseur très sensiblement inférieure à l'épaisseur du second scintillateur organique 10. A titre d'exemple non limitatif, l'épaisseur du premier scintillateur organique 9 est comprise entre 10μm et 1mm et l'épaisseur du second scintillateur organique 10 entre 0,1mm et 10cm. Les premier et second scintillateurs organiques sont fixés l'un à l'autre par un procédé de couplage autogène. Le second scintillateur organique 10 et le photodétecteur 11 sont fixés l'un à l'autre par une couche d'interface optique 15. Les scintillateurs organiques 9 et 10 sont insérés dans un réflecteur de lumière 12. Une fine couche conductrice 14 recouvre la face du scintillateur organique 9 sur laquelle le rayonnement R est incident.

De façon plus générale, le nouveau scintillateur phoswich comprend un premier scintillateur et un deuxième scintillateur constitués chacun d'un matériau polymérique et est caractérisé en ce que le premier scintillateur et le deuxième scintillateur sont en contact direct l'un avec l'autre sans l'intermédiaire d'une couche de liaison.

Par couche de liaison, on entend une couche distincte du matériau du premier scintillateur et du matériau du deuxième scintillateur, cette couche de liaison pouvant être une couche d'adjonction ou une couche en un matériau intermédiaire résultant de la fusion du matériau du premier scintillateur et du matériau du deuxième scintillateur, comme cela est le cas des détecteurs à scintillation comprenant deux scintillateurs liés l'un à l'autre par pressage thermomécanique.

D'un point de vue structural, le premier scintillateur et le deuxième scintillateur peuvent présenter une forme parallélépipédique ou une forme cylindrique selon les besoins de l'application concernée.

Dans le cas où les scintillateurs sont de forme parallélépipédique, le premier scintillateur et le deuxième scintillateur sont, classiquement, en contact l'un avec l'autre, *via* une de leurs faces, qui correspondent aux faces de plus grande surface et de surfaces identiques à l'endroit du contact entre le premier scintillateur et le deuxième scintillateur.

Dans le cas où les scintillateurs sont de forme cylindrique, le premier scintillateur et le deuxième scintillateur sont, classiquement, en contact l'un avec l'autre *via* leurs faces circulaires, qui sont de surfaces identiques à l'endroit du contact entre le premier scintillateur et le deuxième scintillateur.

Le premier scintillateur et le deuxième scintillateur peuvent présenter des épaisseurs différentes, l'épaisseur du premier scintillateur pouvant être inférieure à celle du deuxième scintillateur.

Par exemple, le premier scintillateur peut présenter une épaisseur allant de 10 μm à 1 mm, par exemple, de 50 μm à 1 mm, de préférence de 100 μm à 500 μm, tandis que le deuxième scintillateur peut présenter une épaisseur allant de 1 mm à plusieurs centimètres, par exemple de 1 mm à 100 cm, de préférence de 1 à 4 cm.

Comme mentionné ci-dessus, le premier scintillateur et le deuxième scintillateur sont, tous deux, en un matériau polymérique.

En particulier, le matériau polymérique du premier scintillateur et du deuxième scintillateur peut consister en une matrice polymérique, dans laquelle sont intégrées une ou plusieurs molécules fluorescentes (lesquelles peuvent être également qualifiées de fluorophores), lesquelles vont permettre de générer la scintillation (à savoir, une émission de lumière) caractéristique de l'absorption d'un rayonnement donné.

L'intégration d'une ou plusieurs molécules fluorescentes peut se faire soit par dispersion d'une ou plusieurs de ces molécules dans la matrice polymérique soit par greffage d'une ou plusieurs de ces molécules au sein de la matrice polymérique susmentionnée.

Dans ce dernier cas, le ou les molécules fluorescentes sont liées à la matrice polymérique par le biais de liaisons covalentes (la formation de ce type de liaisons pouvant être effectuée lors de la fabrication par polymérisation de la matrice polymérique, par incorporation d'une ou plusieurs molécules fluorescentes comportant au moins une fonction polymérisable).

Que ce soit pour le premier scintillateur ou le deuxième scintillateur, la matrice polymérique peut être constituée

d'un ou plusieurs polymères choisis de sorte à ne pas affecter les propriétés de détection du scintillateur, la matrice polymérique pouvant être identique pour le premier scintillateur et le deuxième scintillateur.

Concernant le premier scintillateur, la matrice polymérique peut comprendre, en particulier :

- un polymère comprenant des unités répétitives issues de la polymérisation d'au moins un monomère styrénique, tel que le styrène ;
- un polymère comprenant des unités répétitives issues de la polymérisation d'au moins un monomère (méth)acrylate ;
- un polymère comprenant des unités répétitives du type siloxane ; et/ou
- un polymère réticulé comprenant des unités issues de la polymérisation d'au moins un monomère styrénique, d'au moins un monomère (méth)acrylate et éventuellement d'au moins un monomère comprenant au moins deux fonctions polymérisables.

Par unité répétitive du type siloxane, on entend, une unité répétitive comprenant un groupe -Si-O-, l'atome de silicium étant lié, outre à un atome d'oxygène de ladite unité et à un autre atome d'oxygène de l'unité adjacente, à deux autres groupes.

En particulier, les polymères comprenant des unités répétitives du type siloxane peuvent avoir au moins une partie des unités répétitives susmentionnées, dont l'atome de silicium est lié à un groupe aromatique, tel qu'un groupe phényle. La présence de groupes aromatiques au sein de la matrice polymérique contribue à améliorer le transfert énergétique entre la matrice polymérique et les molécules fluorescentes.

Les polymères constitutifs de la matrice polymérique comprenant des unités répétitives du type siloxane peuvent comprendre des unités répétitives répondant à la formule (I) suivante :

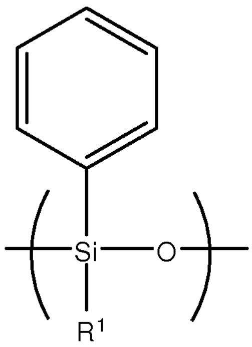

(I)

dans laquelle $R^1$ représente un groupe alkyle comprenant de 1 à 10 atomes de carbone, un groupe hydrocarboné aromatique comprenant de 5 à 10 atomes de carbone (tel qu'un groupe phényle) ou un atome d'hydrogène, et éventuellement des unités répétitives répondant à la formule (II) suivante :

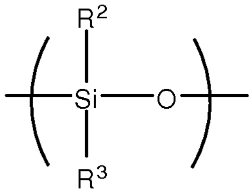

(II)

dans laquelle les $R^2$ et $R^3$, identiques ou différents, représentent un groupe alkyle comprenant de 1 à 10 atomes de carbone, un groupe hydrocarboné aromatique comprenant de 5 à 10 atomes de carbone (tel qu'un groupe phényle) ou un atome d'hydrogène.

Les polymères du type susmentionné peuvent être des polymères réticulés, à savoir des polymères comprenant plusieurs chaînes polymériques liées les unes aux autres *via* un pont de réticulation unissant des motifs répétitifs de chaînes distinctes.

Dans ce cas, de tels polymères, outre éventuellement des motifs répétitifs de formules (I) et (II) tels que mentionnés ci-dessus, peuvent comprendre des motifs répétitifs de formule (III) suivante :

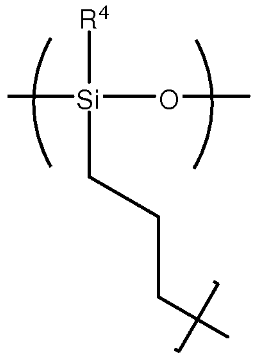

(III)

dans laquelle $R^4$ représente un groupe alkyle comprenant de 1 à 10 atomes de carbone, un groupe hydrocarboné aromatique comprenant de 5 à 10 atomes de carbone (tel qu'un groupe phényle) ou un atome d'hydrogène, le crochet indiquant l'endroit par lequel ladite unité est liée à une autre chaîne polymérique.

Des polymères conformes à la définition donnée ci-dessus peuvent être des polymères résultant d'une réaction d'hydrosilylation d'au moins un composé polysiloxane répondant au moins à l'une des formules (IV) et (V) suivantes :

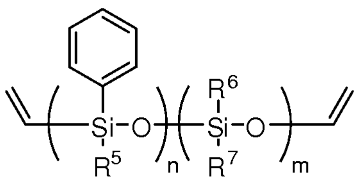

(IV)

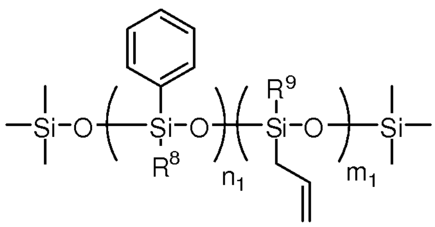

(V)

dans lesquelles :

- $R^5$, $R^6$, $R^7$, $R^8$ et $R^9$ représentent, indépendamment l'un de l'autre, un groupe alkyle comprenant de 1 à 10 atomes de carbone, un groupe hydrocarboné aromatique comprenant de 5 à 10 atomes de carbone, un groupe alcényle comprenant une insaturation en bout de chaîne et comprenant de 2 à 10 atomes de carbone ; et
- n, m, $n_1$ et $m_1$ représentent le nombre de répétition des motifs pris entre parenthèses, avec au moins un composé polysiloxane répondant au moins à l'une des formules (VI) et (VII) suivantes :

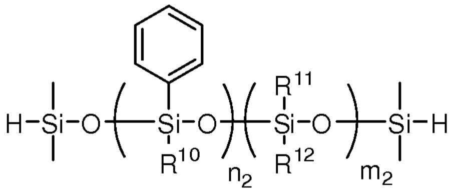

(VI)

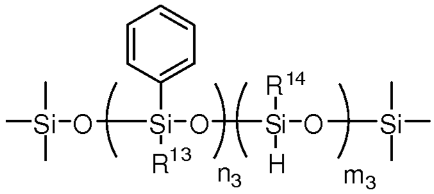

(VII)

dans lesquelles :

- $R^{10}$, $R^{11}$, $R^{12}$, $R^{13}$ et $R^{14}$ représentent, indépendamment l'un de l'autre, un groupe alkyle comprenant de 1 à 10 atomes de carbone, un groupe hydrocarboné aromatique comprenant de 5 à 10 atomes de carbone (tel qu'un groupe phényle) ou un atome d'hydrogène ;
- $n_2$, $m_2$, $n_3$ et $m_3$ représentent le nombre de répétition du motif pris entre parenthèses.

De plus amples détails concernant cette réaction seront fournis dans la partie relative au procédé de préparation des détecteurs de l'invention.

A titre d'exemples de monomères styréniques utilisables pour la matrice polymérique du premier scintillateur, on peut citer les monomères de formules (VIII) et (IX) suivantes :

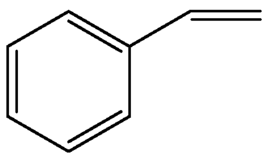

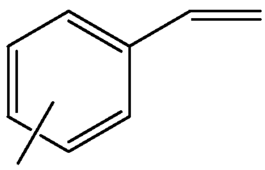

(VIII) (IX)

A titre d'exemples de monomères (méth)acrylates, on peut citer les monomères de formules (X) et (XI) suivantes :

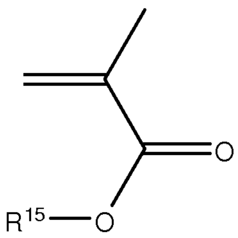

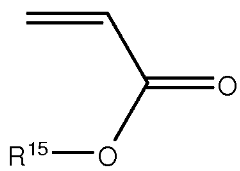

(X) (XI)

dans lesquelles $R^{15}$ représente un groupe hydrocarboné aromatique, tel qu'un groupe aryle, un groupe arylalkyle.

Plus précisément, $R^{15}$ peut être un groupe phényle, un groupe benzyle, un groupe 1-naphtyle ou un groupe 2-naphtyle.

La matrice polymérique peut être avantageusement réticulée, ce qui signifie qu'elle est constituée de polymères comprenant plusieurs chaînes polymériques liées les unes aux autres par des ponts de réticulation.

Ces ponts de réticulation peuvent être issus de l'introduction, lors de l'étape de préparation des polymères par polymérisation, de monomères porteurs d'au moins deux fonctions polymérisables.

A titre d'exemples de tels monomères, on peut citer des di(méth)acrylates d'alkyle, tels que des di(méth)acrylates d'alkyle répondant à l'une des formules (XII) et (XIII) suivantes :

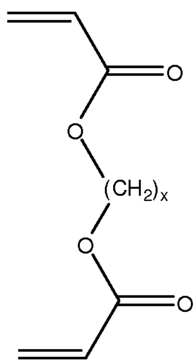
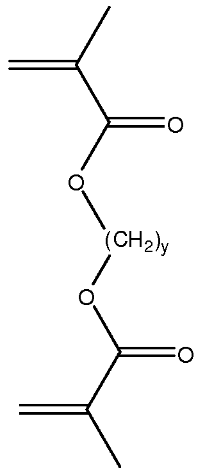

(XII) (XIII)

dans lesquelles x et y représentent le nombre de répétition du motif pris entre parenthèses, x et y pouvant être un entier allant de 1 à 20, de préférence de 2 à 6.

Selon un mode particulier de réalisation, la matrice polymérique du premier scintillateur peut comprendre un polymère réticulé comprenant des unités répétitives issues de la polymérisation d'au moins un monomère styrénique, d'au moins un monomère (méth)acrylate et au moins un monomère comprenant au moins deux fonctions polymérisables, tels que des monomères di(méth)acrylate, lesquels monomères di(méth)acrylates peuvent correspondre à ceux, qui sont définis spécifiquement ci-dessus.

A titre d'exemple, la matrice polymérique du premier scintillateur peut comprendre un polymère comprenant des unités répétitives issues de la polymérisation d'au moins un monomère choisi parmi le styrène, le vinyltoluène, le méthacrylate de phényle, le méthacrylate de benzyle, le méthacrylate de 1-naphtyle ou le méthacrylate de 2-naphtyle et d'au moins un monomère porteur d'au moins deux fonctions éthyléniques choisi parmi les di(méth)acrylates d'alkyle, tels que ceux mentionnés ci-dessus.

Encore plus spécifiquement, la matrice polymérique du premier scintillateur peut comprendre un polymère comprenant des unités répétitives issues de la polymérisation du styrène, du méthacrylate de benzyle et du diméthacrylate de 1,6-hexanediyle.

Les molécules fluorescentes susceptibles d'entrer dans la constitution du premier scintillateur sont avantageusement des molécules fluorescentes caractérisées par un temps de décroissance rapide, à savoir un temps de décroissance allant de 1 à 20 ns, de préférence de 1 à 10 ns.

Il peut s'agir notamment d'un mélange d'une première molécule fluorescente et d'une deuxième molécule fluorescente et éventuellement d'une troisième molécule fluorescente.

La première molécule fluorescente peut être choisie de sorte à présenter un spectre d'absorption, dont l'intensité maximale d'absorption est située entre 250 et 350 nm (par exemple, cette intensité maximale d'absorption peut être centrée sur 300 nm).

La deuxième molécule fluorescente peut être choisie de sorte à présenter un spectre d'absorption apte à recouvrir le spectre d'émission de la première molécule fluorescente (notamment, pour optimiser les transferts énergétiques entre les deux molécules fluorescentes), ce qui signifie, en d'autres termes, que la deuxième molécule fluorescente est apte, d'une part, à absorber les photons de longueurs d'onde appartenant au spectre d'émission de ladite première molécule fluorescente, et d'autre part, suite à cette absorption, à émettre des photons, de telle sorte que le spectre d'émission de ladite deuxième molécule fluorescente s'échelonne de 350 à 650 nm avec une intensité maximale d'émission comprise entre 400 et 600 nm.

Le cas échéant, la troisième molécule fluorescente peut être choisie de sorte à présenter un spectre d'absorption apte à recouvrir le spectre d'émission de la deuxième molécule fluorescente (notamment, pour optimiser les transferts énergétiques entre les deux molécules fluorescentes), ce qui signifie, en d'autres termes, que la troisième molécule fluorescente est apte à absorber les photons de longueurs d'onde appartenant au spectre d'émission de ladite deuxième molécule fluorescente, ladite troisième molécule fluorescente étant apte, suite à cette absorption, à émettre des photons, de telle sorte que le spectre d'émission de ladite troisième molécule fluorescente présente une intensité maximale d'émission comprise entre 500 et 600 nm.

Une première molécule fluorescente du type mentionné ci-dessus peut être un composé 2,5-diphényloxazone, tandis qu'une deuxième molécule fluorescente du type mentionné ci-dessus peut être un composé bis-méthylstyrylbenzène (pouvant être dénommé par bis-MSB).

Concernant le deuxième scintillateur, la matrice polymérique peut comprendre, en particulier :

- un polymère comprenant des unités répétitives issues de la polymérisation d'au moins un monomère styrénique;
- un polymère comprenant des unités répétitives issues de la polymérisation d'au moins un monomère (méth)acrylate ; et/ou
- un polymère réticulé comprenant des unités issues de la polymérisation d'au moins un monomère styrénique, d'au moins un monomère (méth)acrylate et éventuellement d'au moins un monomère comprenant au moins deux fonctions polymérisables.

A titre d'exemples de monomères styréniques, on peut citer les monomères de formules (VIII) et (IX) suivantes :

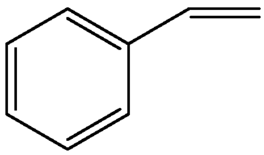

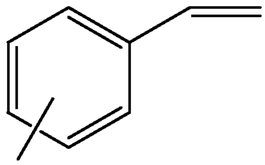

(VIII) (IX)

A titre d'exemples de monomères (méth)acrylates, on peut citer les monomères de formules (X) et (XI) suivantes :

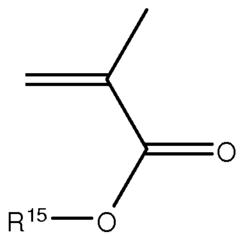

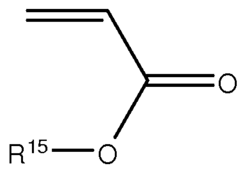

(X) (XI)

dans lesquelles $R^{15}$ représente un groupe hydrocarboné aromatique, tel qu'un groupe aryle, un groupe arylalkyle.

Plus précisément, $R^{15}$ peut être un groupe phényle, un groupe benzyle, un groupe 1-naphtyle ou un groupe 2-naphtyle.

La matrice polymérique est avantageusement réticulée, ce qui signifie qu'elle est constituée de polymères comprenant plusieurs chaînes polymériques liées les unes aux autres par des ponts de réticulation.

Ces ponts de réticulation peuvent être issus de l'introduction, lors de l'étape de préparation des polymères par polymérisation, de monomères porteurs d'au moins deux fonctions polymérisables.

A titre d'exemples de tels monomères, on peut citer des di(méth)acrylates d'alkyle, tels que des di(méth)acrylates d'alkyle répondant à l'une des formules (XII) et (XIII) suivantes :

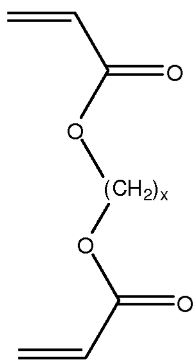

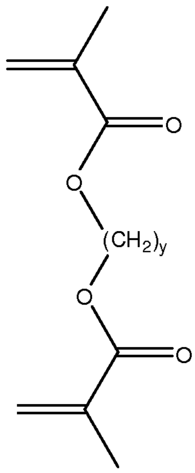

(XII) (XIII)

dans lesquelles x et y représentent le nombre de répétition du motif pris entre parenthèses, x et y pouvant être un entier allant de 1 à 20, de préférence de 2 à 6.

Selon un mode particulier de réalisation de l'invention, la matrice polymérique du deuxième scintillateur peut comprendre un polymère comprenant des unités répétitives issues de la polymérisation d'au moins un monomère styrénique, d'au moins un monomère (méth)acrylate et au moins un monomère comprenant au moins deux fonctions polymérisables, tels que des monomères di(méth)acrylates, lesquels monomères di(méth)acrylates peuvent correspondre à ceux, qui sont définis spécifiquement ci-dessus.

A titre d'exemple, la matrice polymérique du deuxième scintillateur peut comprendre un polymère comprenant des unités répétitives issues de la polymérisation d'au moins un monomère choisi parmi le styrène, le vinyltoluène, le méthacrylate de phényle, le méthacrylate de benzyle, le méthacrylate de 1-naphtyle ou le méthacrylate de 2-naphtyle et d'au moins un monomère porteur d'au moins deux fonctions éthyléniques choisi parmi les di(méth)acrylates d'alkyle, tels que ceux mentionnés ci-dessus.

Encore plus spécifiquement, la matrice polymérique du deuxième scintillateur peut comprendre un polymère comprenant des unités répétitives issues de la polymérisation du styrène, du méthacrylate de benzyle et du diméthacrylate de 1,6-hexanediyle.

Les molécules fluorescentes susceptibles d'entrer dans la constitution du deuxième scintillateur sont avantageusement des molécules fluorescentes caractérisées par un temps de décroissance élevé, à savoir un temps de décroissance allant de 20 à 500 ns, de préférence de 50 à 200 ns, ce temps de décroissance devant être 4 à 50 fois plus élevé que ne l'est le temps de décroissance des molécules fluorescentes du premier scintillateur.

Il peut s'agir notamment d'un mélange d'une première molécule fluorescente, d'une deuxième molécule fluorescente et éventuellement, d'une troisième molécule fluorescente.

La première molécule fluorescente peut être choisie de sorte à présenter un spectre d'absorption, dont l'intensité maximale d'absorption est située entre 250 et 350 nm (par exemple, cette intensité maximale d'absorption peut être centrée sur 300 nm).

La deuxième molécule fluorescente peut être choisie de sorte à présenter un spectre d'absorption apte à recouvrir le spectre d'émission de la première molécule fluorescente (notamment, pour optimiser les transferts énergétiques entre les deux molécules fluorescentes), ce qui signifie, en d'autres termes, que la deuxième molécule fluorescente est apte, d'une part, à absorber les photons de longueurs d'onde appartenant au spectre d'émission de ladite première molécule fluorescente, d'autre part, à émettre des photons, de telle sorte que le spectre d'émission de ladite deuxième molécule fluorescente s'échelonne de 350 à 650 nm avec une intensité maximale d'émission comprise entre 400 et 500 nm.

Le cas échéant, la troisième molécule fluorescente peut être choisie de sorte à présenter un spectre d'absorption apte à recouvrir le spectre d'émission de la deuxième molécule fluorescente (notamment, pour optimiser les transferts énergétiques entre les deux molécules fluorescentes), ce qui signifie, en d'autres termes, que la troisième molécule fluorescente est apte à absorber les photons de longueurs d'onde appartenant au spectre d'émission de ladite deuxième molécule fluorescente, ladite troisième molécule fluorescente étant apte, suite à cette absorption, à émettre des photons, de telle sorte que le spectre d'émission de ladite troisième molécule fluorescente présente une intensité maximale d'émission comprise entre 500 et 600 nm.

Une première molécule fluorescente du type mentionné ci-dessus peut être un composé pyrène, tandis qu'une deuxième molécule fluorescente du type mentionné ci-dessus peut être un composé 9,10-diphénylanthracène.

Outre la présence d'un premier scintillateur et d'un deuxième scintillateur en contact l'un avec l'autre, les détecteurs à scintillation de l'invention peuvent comporter au niveau de la face avant (c'est-à-dire la face opposée à celle qui est en contact avec le deuxième scintillateur) du premier scintillateur une fenêtre d'entrée du rayonnement incident, cette fenêtre d'entrée pouvant se matérialiser sous forme d'une couche, par exemple, une couche opaque (par exemple, une couche en aluminium).

Cette fenêtre d'entrée permet au rayonnement incident d'entrer en contact avec le premier scintillateur tout en empêchant la lumière ambiante d'entrer en contact avec ce premier scintillateur.

Cette fenêtre d'entrée, lorsqu'elle se présente sous forme d'une couche, doit être, de préférence, la plus fine possible, de sorte à dégrader le moins possible le seuil de détection du détecteur à scintillateur. Par exemple, elle peut présenter une épaisseur allant de 10 nm à 5 $\mu$m.

En outre, au niveau de la face arrière du deuxième scintillateur (c'est-à-dire la face opposée à la face du deuxième scintillateur en contact avec le premier scintillateur), il peut être prévu une fenêtre de sortie consistant en une couche de liaison de nature à faire la liaison entre le deuxième scintillateur et un photomultiplicateur.

Cette couche de liaison peut être une couche en un matériau choisi parmi les graisses, les colles, les gels, les ciments, les composés élastomères, les composés silicones.

Enfin, au niveau de la surface latérale de l'empilement constitué par le premier scintillateur et le deuxième scintillateur, il peut être prévu une couche en un matériau réfléchissant, ce matériau réfléchissant pouvant comprendre de l'aluminium (par exemple, du mylar aluminisé ou du papier aluminium) ou une couche en un matériau diffusant, ce matériau diffusant pouvant comprendre du téflon, une peinture à base d'oxyde de titane $TiO_2$, une peinture à base d'oxyde de magnésium MgO, du papier filtre Millipore.

Le procédé de fabrication du détecteur à scintillation conforme au mode de réalisation préférentiel de l'invention comprend une étape de réalisation du premier ou deuxième scintillateur sur un support, lequel support correspond à l'autre scintillateur constitutif du détecteur (en l'occurrence, le premier scintillateur si l'étape de réalisation concerne le deuxième scintillateur et vice versa).

L'étape de réalisation du premier ou deuxième scintillateur peut être effectuée par polymérisation d'un milieu de polymérisation comprenant des monomères ou oligomères destinés à entrer dans la constitution du premier scintillateur ou deuxième scintillateur. Ce milieu de polymérisation comprend, en outre, la ou les molécules fluorescentes destinées à entrer dans le premier scintillateur ou deuxième scintillateur.

Le procédé peut comprendre, avant l'étape de réalisation d'un scintillateur (premier ou deuxième) sur le support, l'étape de réalisation de l'autre scintillateur qui constitue ledit support.

Cette étape de réalisation peut être effectuée par polymérisation d'un milieu de polymérisation, comprenant, en outre, la ou les molécules fluorescentes destinées à entrer dans la constitution ledit scintillateur.

La ou les molécules fluorescentes peuvent comprendre au moins une fonction polymérisable, auquel cas elles seront, à l'issue de la polymérisation, greffées directement par covalence, dans la matrice polymérique.

Il s'entend que ces étapes de réalisation seront réalisées dans des moules de forme adaptée de sorte à ce que le produit final ait la forme que l'on souhaite obtenir pour le premier et deuxième scintillateurs.

Selon un premier mode de réalisation, lorsqu'il s'agit de préparer le premier scintillateur, le milieu de polymérisation peut comprendre :

- au moins un monomère styrénique tel que mentionné ci-dessus en présence éventuelle d'au moins un monomère (méth)acrylate et/ou d'au moins un monomère comprenant au moins deux fonctions polymérisable ;
- des initiateurs de polymérisation ;
- des molécules fluorescentes.

Les initiateurs de polymérisation, s'ils sont nécessaires, peuvent être un composé peroxyde, tel que le peroxyde de benzoyle, ou un composé nitrile, tels que l'azo(bis)isobutyronitrile. Ces initiateurs de polymérisation peuvent être compris, dans le milieu de polymérisation à des pourcentages molaires compris entre 0,01 et 2%, de préférence, un pourcentage de 0,5%.

Lorsque la réaction de polymérisation est réalisée en présence de monomères méthacrylates, celle-ci peut être induite thermiquement en chauffant le milieu de polymérisation à une température adaptée, ou par dopage du milieu de polymérisation par du 2,2-diméthoxy-2-phénylacétophénone suivi d'une irradiation sous UV (par exemple, à une longueur de 355 nm). La concentration molaire en 2,2-diméthoxy-2-phénylacétophénone peut être comprise entre 0,1 et 2%. Préférentiellement, la concentration molaire utilisée peut être comprise entre 0,5 et 1%.

Lorsque la réaction de polymérisation est réalisée en présence de monomères styréniques, celle-ci peut être induite thermiquement.

La proportion volumique des monomères styréniques ou méthacrylates par rapport aux monomères comprenant au moins deux fonctions polymérisables dans le mélange réactionnel peut être comprise entre 99/1 et 60/40. Préférentiellement, cette proportion volumique peut être comprise entre 90/10 et 50/50.

Selon un deuxième mode de réalisation, lorsqu'il s'agit de préparer le premier scintillateur, le milieu de polymérisation peut comprendre :

*un composé polysiloxane répondant au moins à l'une des formules (IV) et (V) suivantes :

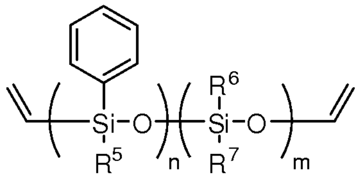

(IV)

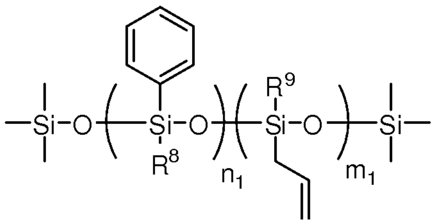

(V)

dans lesquelles :

- $R^5$, $R^6$, $R^7$, $R^8$ et $R^9$ représentent, indépendamment l'un de l'autre, un groupe alkyle comprenant de 1 à 10 atomes de carbone, un groupe hydrocarboné aromatique comprenant de 5 à 10 atomes de carbone, un groupe alcényle comprenant une insaturation en bout de chaîne et comprenant de 2 à 10 atomes de carbone ; et
- n, m, $n_1$ et $m_1$ représentent le nombre de répétition des motifs mis entre parenthèses ;

*un composé polysiloxane répondant au moins à l'une des formules (VI) et (VII) suivantes :

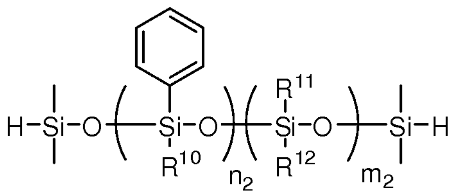

(VI)

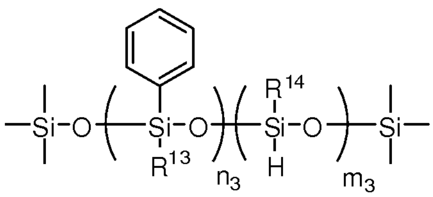

(VII)

dans lesquelles :

- $R^{10}$, $R^{11}$, $R^{12}$, $R^{13}$ et $R^{14}$ représentent, indépendamment l'un de l'autre, un groupe alkyle comprenant un groupe alkyle comprenant de 1 à 10 atomes de carbone, un groupe hydrocarboné aromatique comprenant de 5 à 10 atomes de carbone (tel qu'un groupe phényle) ou un atome d'hydrogène ;

- $n_2$, $m_2$, $n_3$ et $m_3$ représentent le nombre de répétition du motif pris entre parenthèses.
- un catalyseur d'hydrosilylation ; et
- des molécules fluorescentes.

Hormis l'utilisation des composés purs, toutes les fractions molaires entre les composés (IV) ou (V) et les composés (VI) ou (VII) peuvent être utilisées, c'est-à-dire de 99% à 1% et de 1% à 99%.
Si nécessaire, la réaction entre les composés (IV) ou (V) et les composés (VI) ou (VII) peut être facilitée thermiquement. Préférentiellement, les réactions sont réalisées entre 30°C et 50°C.
Le catalyseur d'hydrosilylation est un catalyseur au platine connu dans les réactions d'hydrosilylation. Plus particulièrement, le catalyseur de Karstedt ou le cis-bis(diéthylsulfato)-dichloroplatine (II) peuvent être utilisés à des concentrations molaires comprises entre 0,01% et 3%.
Que ce soit pour le premier mode de réalisation ou le deuxième mode de réalisation ou encore pour d'autres modes de réalisations, les molécules fluorescentes peuvent comprendre au moins une fonction polymérisable, auquel cas elles seront, à l'issue de la polymérisation, greffées directement par covalence, dans la matrice polymérique, de telles molécules pouvant être le p-vinylbiphényle ou le vinylnaphtalène.
Quand il s'agit de préparer le deuxième scintillateur, le milieu de polymérisation peut comprendre :

- au moins un monomère styrénique tel que mentionné ci-dessus en présence éventuelle d'au moins un monomère (méth)acrylate et/ou d'au moins un monomère comprenant au moins deux fonctions polymérisable ; et
- des molécules fluorescentes.

Lorsque la réaction de polymérisation est réalisée en présence de monomères méthacrylates, celle-ci peut être induite thermiquement en chauffant le milieu de polymérisation à une température adaptée, ou par dopage du milieu de polymérisation par du 2,2-dimethoxy-2-phénylacétophénone suivi d'une irradiation sous UV (par exemple, à une longueur de 355 nm). La concentration molaire en 2,2-dimethoxy-2-phénylacétophénone peut être comprise entre 0,1 et 2%. Préférentiellement, la concentration molaire utilisée peut être comprise entre 0,5 et 1%.
Lorsque la réaction de polymérisation est réalisée en présence de monomères styréniques, celle-ci peut être induite thermiquement.
La proportion volumique des monomères styréniques ou méthacrylates par rapport aux monomères comprenant au moins deux fonctions polymérisables dans le mélange réactionnel peut être comprise entre 99/1 et 60/40. Préférentiellement, cette proportion volumique peut être comprise entre 90/10 et 50/50.
La ou les molécules fluorescentes peuvent comprendre au moins une fonction polymérisable, auquel cas elles seront, à l'issue de la polymérisation, greffées directement par covalence, dans la matrice polymérique, ces molécules fluorescentes pouvant être le (méth)acrylamide de pyrényle ou le (méth)acrylate de pyrényle.
Une fois le premier scintillateur et le deuxième scintillateur réalisés, il peut être procédé à la réalisation d'une fenêtre d'entrée telle que mentionnée ci-dessus, du couplage du deuxième scintillateur avec un photomultiplicateur ainsi qu'à un revêtement latéral destiné à recouvrir la surface latérale de l'empilement constitué par du premier scintillateur et du deuxième scintillateur.
La fenêtre d'entrée peut être réalisée par dépôt sur la face avant du premier scintillateur (c'est-à-dire la face opposée à la face en contact avec le deuxième scintillateur) d'une couche métallique, les techniques de dépôt pouvant être utilisées étant l'évaporation thermique sous vide, l'évaporation par faisceau d'électrons sous vide, la pulvérisation cathodique sous vide, l'électrodéposition, avec, pour préférence, l'évaporation thermique sous vide.
Le couplage du deuxième scintillateur avec un photomultiplicateur peut être réalisé grâce à l'interposition d'une couche de liaison entre ledit deuxième scintillateur et le photomultiplicateur.
Avant l'interposition de cette couche de liaison, la face arrière du scintillateur aval (c'est-à-dire la face opposée à celle qui est en contact avec le scintillateur amont) peut être polie jusqu'à obtenir un état de surface adapté au transfert lumineux du scintillateur aval vers le photodétecteur.
La couche de liaison peut être une couche optique, c'est-à-dire une couche, qui laisse passer le rayonnement sortant du scintillateur aval, cette couche pouvant être une couche en un matériau choisi parmi les graisses, les colles, les gels, les ciments, les composés élastomères et les composés silicones.
Quant au revêtement latéral, il peut être réalisé par dépôt sur la surface latérale de l'empilement du premier et deuxième scintillateurs d'un matériau apte à réfléchir ou à diffuser la lumière. Il peut s'agir, par exemple, de mylar aluminisé ou de papier aluminium pour réaliser un matériau réfléchissant ou de ruban en téflon, d'une peinture à base de $TiO_2$, à base de MgO, de papier filtre Millipore pour réaliser un matériau diffusant, une peinture à base de $TiO_2$ étant préférentiellement utilisée.
Les détecteurs de scintillation de l'invention sont des détecteurs versatiles, qui vont grâce au choix des matériaux constitutifs du premier scintillateur et du deuxième scintillateur permettre d'effectuer une discrimination entre plusieurs types de rayonnements ionisants, par exemple, entre électrons et photons (d'énergie > 1 keV).

La synthèse des différents éléments constitutifs du scintillateur phoswich est décrite ci-dessous.

Synthèse du premier scintillateur

Du styrène, du méthacrylate de benzyle, du diméthacrylate de 1,6-hexanediyle, du 2,5-diphényloxazole et du bis-MSB sont mélangés sous atmosphère inerte dans un flacon sec.

Lé mélange est libéré de tout gaz par la méthode du dégazage à froid sous vide (correspondant à la terminologie anglaise « freeze-pump-thaw »), puis il est versé avec précaution dans un moule en téflon élaboré pour donner la morphologie finale du scintillateur à obtenir. Le mélange placé dans le moule est chauffé à 60°C pendant 7 à 10 jours.

Le produit résultant est ensuite démoulé puis poli sur un des deux plus grand cotés jusqu'à obtenir un état de surface optiquement compatible avec les applications recherchées.

Synthèse du second scintillateur

Du styrène, du méthacrylate de benzyle, du diméthacrylate de 1,6-hexanediyle, du pyrène et du 9,10-diphénylanthracène sont mélangés sous atmosphère inerte dans un flacon sec.

Le mélange est libéré de tout gaz par la méthode du dégazage à froid sous vide (correspondant à la terminologie anglaise « freeze-pump-thaw »), puis il est versé avec précaution dans un moule contenant au fond le premier scintillateur. Le mélange placé dans le moule est chauffé à 60°C pendant 7 à 10 jours.

Le produit résultant est ensuite démoulé puis poli sur un des deux plus grand cotés jusqu'à obtenir un état de surface optiquement compatible avec les applications recherchées.

Réalisation de la fenêtre d'entrée

La métallisation des scintillateurs peut être réalisée par évaporation thermique sous vide. Le principe de cette technique consiste à chauffer dans un creuset traversé par un courant électrique (effet Joule) le matériau à déposer. Le dépôt est réalisé dans une enceinte à vide. Le matériau vaporisé vient se condenser sur le substrat (scintillateur) placé au-dessus du creuset.

Le choix du creuset dépend du matériau à évaporer. Dans le cas d'un dépôt d'aluminium, il peut être utilisé un creuset en tungstène, la température de fusion de ce creuset étant supérieure à la température d'évaporation de l'aluminium.

L'épaisseur des couches et la vitesse du dépôt sont contrôlées à l'aide d'une balance à quartz.

Pour des scintillateurs de grande surface, un système de rotation du support permettant de déplacer le scintillateur au cours de l'évaporation peut être mis en oeuvre pour améliorer l'homogénéité des couches déposées (variation de l'épaisseur de la couche déposée).

Réalisation de la fenêtre de sortie

Elle consiste à enduire la surface du scintillateur d'une fine couche de graisse optique pour permettre le contact avec la cellule de photodétection.

## Revendications

1. Procédé de traitement de signaux électriques issus d'un scintillateur phoswich comprenant un scintillateur amont (1) et un scintillateur aval (2), **caractérisé en ce qu'**il comprend, pour chaque signal électrique :

   - une numérisation du signal électrique,
   - une détermination d'une amplitude A et d'une surface intégrale S du signal électrique numérisé,
   - un calcul d'une première donnée $S_1$ et d'une deuxième donnée $S_2$ à l'aide des équations respectives suivantes:

$$S_1 = [\tau_1/(\tau_2-\tau_1)][A\ (\tau_2/\tau_0) - S],$$

$$S_2 = [\tau_2/(\tau_2-\tau_1)][S - A\ (\tau_1/\tau_0)],$$

et
où :

→ $\tau_1$ est une constante de décroissance de signal caractéristique d'une détection de particule dans le scintillateur amont;
→ $\tau_2$ est une constante de décroissance de signal caractéristique d'une détection de particule dans le scintillateur aval;
→ $\tau_0$ est une constante d'intégration choisie pour la mesure de la surface intégrale S,

- un affichage des première et deuxième donnée $S_1$, $S_2$ dans un repère orthonormé (S1, S2), la première donnée $S_1$ étant positionnée selon l'axe $S_1$ et la deuxième donnée $S_2$ étant positionnée selon l'axe S2 de sorte que les première et deuxième données associées à un même signal électrique correspondant à un même événement,
- une délimitation d'une zone d'intérêt d'événements (Z4) par sélection, parmi les événements répartis dans le repère (S1, S2), des événements qui sont contenus dans une zone de calibration ($Z_{CAL}$) définie comme suite à la détection de particules β lors d'une étape de calibration préliminaire.

**2.** Procédé selon la revendication 1, dans lequel l'étape de délimitation de la zone d'intérêt est suivie d'une étape (E5) de comptage des événements dans la zone d'intérêt.

**3.** Procédé selon la revendication 2, dans lequel une mesure préliminaire de bruit correspondant à la détection de particules γ issues du bruit ambiant conduit à un comptage d'événements de bruit dans la zone de calibration et le comptage des événements de bruit est soustrait des événements comptés dans la zone d'intérêt.

**4.** Détecteur à scintillation comprenant un scintillateur phoswich et un circuit de traitement adapté pour la mise en oeuvre d'un procédé de traitement de signaux électriques issus du scintillateur phoswich, **caractérisé en ce que** le procédé de traitement est un procédé selon l'une quelconque des revendications 1 à 3.

**5.** Détecteur selon la revendication 4, dans lequel le scintillateur phoswich comprend un premier scintillateur et un deuxième scintillateur constitués chacun d'un matériau polymérique, le premier scintillateur et le deuxième scintillateur étant en contact direct l'un avec l'autre sans l'intermédiaire d'une couche de liaison.

**6.** Détecteur selon la revendication 5, dans lequel le premier scintillateur est un « scintillateur amont » et le deuxième scintillateur un « scintillateur aval » en référence au sens de propagation de particules détectées par le détecteur.

**7.** Détecteur selon l'une quelconque des revendications 5 ou 6, dans lequel le premier scintillateur et le deuxième scintillateur présentent une forme parallélépipédique ou une forme cylindrique.

**8.** Détecteur selon l'une quelconque des revendications 5 à 7, dans lequel le matériau polymérique consiste en une matrice polymérique, dans laquelle sont dispersées une ou plusieurs molécules fluorescentes, lesquelles vont permettre de générer une scintillation (à savoir, une émission de lumière) caractéristique de l'absorption d'un rayonnement donné.

**9.** Détecteur selon la revendication 8, dans lequel la matrice polymérique du premier scintillateur comprend :

- un polymère comprenant des unités répétitives issues de la polymérisation d'au moins un monomère styrénique ;
- un polymère comprenant des unités répétitives issues de la polymérisation d'au moins un monomère (méth)acrylate ;
- un polymère comprenant des unités répétitives du type siloxane ; et/ou
- un polymère réticulé comprenant des unités issues de la polymérisation d'au moins un monomère styrénique, d'au moins un monomère (méth)acrylate et éventuellement d'au moins un monomère comprenant au moins deux fonctions polymérisables.

**10.** Détecteur selon la revendication 9, dans lequel les polymères comprenant des unités répétitives du type siloxane comprennent au moins une partie desdites unités répétitives présentant un atome de silicium lié à un groupe aromatique.

**11.** Détecteur selon la revendication 9 ou 10, dans lequel les polymères comprenant des unités répétitives du type

siloxane comprennent des unités répondant à la formule (I) suivante :

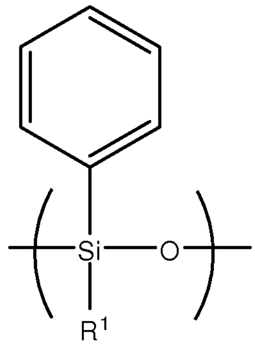

(I)

dans laquelle $R^1$ représente un groupe alkyle comprenant de 1 à 10 atomes de carbone, un groupe hydrocarboné aromatique comprenant de 5 à 10 atomes de carbone ou un atome d'hydrogène et éventuellement des unités répétitives répondant à la formule (II) suivante :

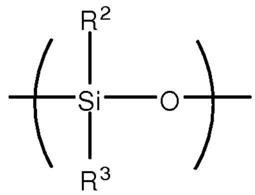

(II)

dans laquelle les $R^2$ et $R^3$, identiques ou différents, représentent un groupe alkyle comprenant de 1 à 10 atomes de carbone, un groupe hydrocarboné aromatique comprenant de 5 à 10 atomes de carbone ou un atome d'hydrogène.

**12.** Détecteur selon l'une quelconque des revendications 10 ou 11, dans lequel les polymères sont des polymères réticulés.

**13.** Détecteur selon la revendication 12, dans lequel les polymères comprennent des unités répétitives de formule (III) suivante :

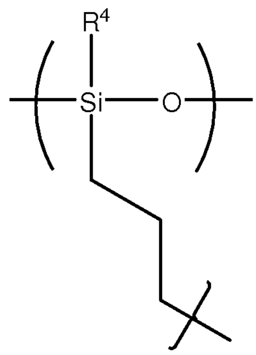

(III)

dans laquelle $R^4$ représente un groupe alkyle comprenant de 1 à 10 atomes de carbone, un groupe hydrocarboné aromatique comprenant de 5 à 10 atomes de carbone ou un atome d'hydrogène.

**14.** Détecteur selon la revendication 9, dans lequel le monomère (méth)acrylate répond à l'une des formules (X) et (XI) suivantes :

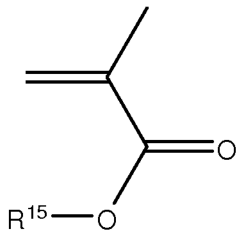

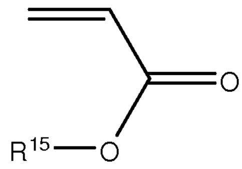

(X) (XI)

dans lesquelles $R^{15}$ représente un groupe hydrocarboné aromatique.

**15.** Détecteur selon la revendication 9, dans lequel le monomère comprenant au moins deux fonctions polymérisables est un di(méth)acrylate d'alkyle répondant à l'une des formules (XII) et (XIII) suivantes :

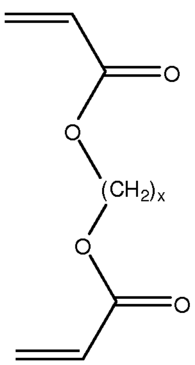

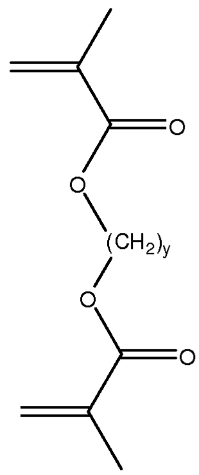

(XII) (XIII)

dans lesquelles x et y représentent le nombre de répétition du motif pris entre parenthèses, x et y pouvant être un entier allant de 1 à 20.

**16.** Détecteur selon la revendication 9, dans lequel la matrice polymérique du premier scintillateur comprend un polymère réticulé comprenant des unités répétitives issues de la polymérisation d'au moins un monomère choisi parmi le styrène, le vinyltoluène, le méthacrylate de phényle, le méthacrylate de benzyle, le méthacrylate de 1-naphtyle ou le méthacrylate de 2-naphtyle et d'au moins un monomère porteur d'au moins deux fonctions éthyléniques choisi parmi les di(méth)acrylates d'alkyle, tels que ceux définis à la revendication 15.

**17.** Détecteur selon la revendication 16, dans lequel la matrice polymérique du premier scintillateur comprend un polymère comprenant des unités répétitives issues de la polymérisation du styrène, du méthacrylate de benzyle et du diméthacrylate de 1,6-hexanediyle.

**18.** Détecteur selon l'une quelconque des revendications 8 à 17, dans lequel les molécules fluorescentes entrant dans la constitution du premier scintillateur présentent un temps de décroissance allant de 1 à 20 ns, de préférence de 1 à 10 ns.

**19.** Détecteur selon la revendication 18, dans lequel les molécules fluorescentes consistent en un mélange d'une première molécule fluorescente et d'une deuxième molécule fluorescente.

**20.** Détecteur selon la revendication 19, dans lequel la première molécule fluorescente est choisie de sorte à présenter

un spectre d'absorption, dont l'intensité maximale d'absorption est située entre 250 et 350 nm.

**21.** Détecteur selon la revendication 19 ou 20, dans lequel la deuxième molécule fluorescente est choisie de sorte à présenter un spectre d'absorption apte à recouvrir le spectre d'émission de la première molécule fluorescente, ce qui signifie, en d'autres termes, que la deuxième molécule fluorescente est apte, d'une part, à absorber les photons de longueurs d'onde appartenant au spectre d'émission de ladite première molécule fluorescente, et d'autre part, suite à cette absorption, à émettre des photons, de telle sorte que le spectre d'émission de ladite deuxième molécule fluorescente s'échelonne de 350 à 650 nm avec une intensité maximale d'émission comprise entre 400 et 600 nm.

**22.** Détecteur selon l'une quelconque des revendications 17 à 21, dans lequel la première molécule fluorescente est un composé 2,5-diphényloxazone, tandis que la deuxième molécule fluorescente est un composé bis-méthylstyrylbenzène.

**23.** Détecteur l'une quelconque des revendications 8 à 22, dans lequel la matrice polymérique du deuxième scintillateur comprend :

- un polymère comprenant des unités répétitives issues de la polymérisation d'au moins un monomère styrénique;
- un polymère comprenant des unités répétitives issues de la polymérisation d'au moins un monomère (méth)acrylate ; et/ou
- un polymère réticulé comprenant des unités issues de la polymérisation d'au moins un monomère styrénique, d'au moins un monomère (méth)acrylate et éventuellement d'au moins un monomère comprenant au moins deux fonctions polymérisables.

**24.** Détecteur selon la revendication 23, dans lequel le monomère (méth)acrylate répond à l'une des formules (X) et (XI) suivantes :

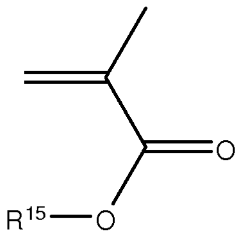

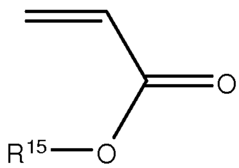

(X) (XI)

dans lesquelles $R^{15}$ représente un groupe hydrocarboné aromatique.

**25.** Détecteur selon la revendication 23, dans lequel le monomère comprenant au moins deux fonctions polymérisables est un di(méth)acrylate d'alkyle répondant à l'une des formules (XII) et (XIII) suivantes :

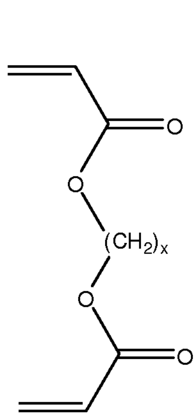

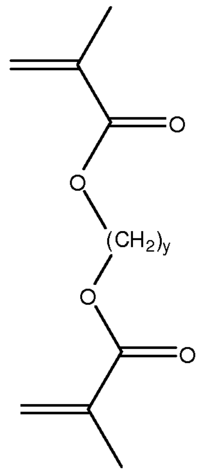

(XII) (XIII)

dans lesquelles x et y représentent le nombre de répétition du motif pris entre parenthèses, x et y pouvant être un entier allant de 1 à 20.

**26.** Détecteur selon la revendication 23, dans lequel la matrice polymérique du deuxième scintillateur comprend un polymère comprenant des unités répétitives issues de la polymérisation d'au moins un monomère choisi parmi le styrène, le vinyltoluène, le méthacrylate de phényle, le méthacrylate de benzyle, le méthacrylate de 1-naphtyle ou le méthacrylate de 2-naphtyle et d'au moins un monomère porteur d'au moins deux fonctions éthyléniques choisi parmi les di(méth)acrylates d'alkyle, tels que définis à la revendication 25.

**27.** Détecteur selon la revendication 26, dans lequel la matrice polymérique du deuxième scintillateur comprend un polymère comprenant des unités répétitives issues de la polymérisation du styrène, du méthacrylate de benzyle et du diméthacrylate de 1,6-hexanediyle.

**28.** Détecteur selon l'une quelconque des revendications 8 à 27, dans lequel les molécules fluorescentes entrant dans la constitution du deuxième scintillateur présentent un temps de décroissance allant de 20 à 500 ns.

**29.** Détecteur selon la revendication 28, dans lequel les molécules fluorescentes consistent en un mélange d'une première molécule fluorescente et d'une deuxième molécule fluorescente.

**30.** Détecteur selon la revendication 29, dans lequel la première molécule fluorescente est choisie de sorte à présenter un spectre d'absorption, dont l'intensité maximale d'absorption est située entre 250 et 350 nm.

**31.** Détecteur selon la revendication 29 ou 30, dans lequel la deuxième molécule fluorescente est choisie de sorte à présenter un spectre d'absorption apte à recouvrir le spectre d'émission de la première molécule fluorescente, ce qui signifie, en d'autres termes, que la deuxième molécule fluorescente est apte, d'une part, à absorber les photons de longueurs d'onde appartenant au spectre d'émission de ladite première molécule fluorescente, d'autre part, à émettre des photons, de telle sorte que le spectre d'émission de ladite deuxième molécule fluorescente s'échelonne de 350 à 650 nm avec une intensité maximale d'émission comprise entre 400 et 500 nm.

**32.** Détecteur selon l'une quelconque des revendications 29 à 31, dans lequel la première molécule fluorescente est un composé pyrène, tandis que la deuxième molécule fluorescente est un composé 9,10-diphénylanthracène.

**Patentansprüche**

**1.** Verfahren zur Verarbeitung von elektrischen Signalen, die von einem Phoswich-Szintillator stammen, umfassend einen stromaufwärtigen Szintillator (1) und einen stromabwärtigen Szintillator (2), **dadurch gekennzeichnet, dass** es für jedes elektrische Signal umfasst:

- eine Digitalisierung des elektrischen Signals,

- eine Bestimmung einer Amplitude A und einer integralen Oberfläche S des digitalisierten elektrischen Signals,
- eine Berechnung einer ersten Datenangabe $S_1$ und einer zweiten Datenangabe $S_2$ mittels der nachfolgenden jeweiligen Gleichungen:

$$S_1 = [\tau_1/(\tau_2 - \tau_1)][A(\tau_2/\tau_0) - S],$$

$$S_2 = [\tau_2/(\tau_2 - \tau_1)][S - A(\tau_1/\tau_0)],$$

*und*
wobei:

→ $\tau_1$ eine Abnahmekonstante des charakteristischen Signals einer Partikelerfassung in dem stromaufwärtigen Szintillator ist;
→ $\tau_2$ eine Abnahmekonstante des charakteristischen Signals einer Partikelerfassung in dem stromabwärtigen Szintillator ist;
→ $\tau_0$ eine Integrationskonstante ist, ausgewählt für die Messung der integralen Oberfläche *S*,

- eine Anzeige der ersten und der zweiten Datenangabe $S_1$, $S_2$ in einem orthonormierten Koordinatensystem (S1, S2), wobei die erste Datenangabe $S_1$ entlang der Achse S1 positioniert wird, und die zweite Datenangabe $S_2$ entlang der Achse S2 positioniert wird, derart, dass die erste und zweite Datenangabe, die ein und demselben elektrischen Signal zugeordnet sind, ein und demselben Ereignis entsprechen,
- eine Begrenzung einer Ereignisinteressezone (Z4) durch Auswahl, aus den in dem Koordinatensystem (S1, S2) verteilten Ereignissen, derjenigen Ereignisse, die in einer Kalibrierungszone ($Z_{CAL}$) enthalten sind, welche im Anschluss an die Erfassung von β-Partikeln während eines vorherigen Kalibrierungsschritts definiert wird.

**2.** Verfahren nach Anspruch 1, bei dem auf den Schritt der Begrenzung der Interessezone ein Schritt (E5) der Zählung der Ereignisse in der Interessezone folgt.

**3.** Verfahren nach Anspruch 2, bei dem eine vorherige Messung von Rauschen, entsprechend der Erfassung von γ-Partikeln, die aus dem Umgebungsrauschen stammen, zu einer Zählung von Rauschereignissen in der Kalibrierungszone führt, und die Zählung der Rauschereignisse von den in der Interessezone gezählten Ereignissen subtrahiert wird.

**4.** Szintillationsdetektor, umfassend einen Phoswich-Szintillator und eine Verarbeitungsschaltung, die ausgelegt ist für die Durchführung eines Verfahrens zur Verarbeitung von elektrischen Signalen, die aus einem Phoswich-Szintillator stammen, **dadurch gekennzeichnet, dass** das Verarbeitungsverfahren ein Verfahren nach einem der Ansprüche 1 bis 3 ist.

**5.** Detektor nach Anspruch 4, bei dem der Phoswich-Szintillator einen ersten Szintillator und einen zweiten Szintillator umfasst, die jeweils durch ein Polymermaterial gebildet sind, wobei der erste Szintillator und der zweite Szintillator ohne Zwischenfügung einer Verbindungsschicht in direktem Kontakt miteinander sind.

**6.** Detektor nach Anspruch 5, bei dem der erste Szintillator ein "stromaufwärtiger Szintillator" ist, und der zweite Szintillator ein "stromabwärtiger Szintillator" ist, bezogen auf die Ausbreitungsrichtung von Partikeln, die durch den Detektor erfasst werden.

**7.** Detektor nach einem der Ansprüche 5 oder 6, bei dem der erste Szintillator und der zweite Szintillator eine Parallelepipedform oder eine zylindrische Form aufweisen.

**8.** Detektor nach einem der Ansprüche 5 bis 7, bei dem das Polymermaterial aus einer Polymermatrix besteht, in der ein oder mehr Fluoreszenzmoleküle dispergiert sind, die es ermöglichen, eine Szintillation (d. h. eine Lichtemission) zu erzeugen, die charakteristisch ist für die Absorption einer gegebenen Strahlung.

**9.** Detektor nach Anspruch 8, bei dem die Polymermatrix des ersten Szintillators umfasst:

- ein Polymer, umfassend sich wiederholende Einheiten, die aus der Polymerisation wenigstens eines Styrolmonomers stammen;
- ein Polymer, umfassend sich wiederholende Einheiten, die aus der Polymerisation wenigstens eines (Meth)acrylatmonomers stammen;
- ein Polymer, umfassend sich wiederholende Einheiten vom Typ Siloxan; und/oder
- ein vernetztes Polymer, umfassend Einheiten, die aus der Polymerisation wenigstens eines Styrolmonomers, wenigstens eines (Meth)acrylatmonomers und gegebenenfalls wenigstens eines Monomers stammen, umfassend wenigstens zwei polymerisierbare funktionelle Gruppen.

**10.** Detektor nach Anspruch 9, bei dem die Polymere, die sich wiederholende Einheiten vom Typ Siloxan umfassen, wenigstens einen Teil der sich wiederholenden Einheiten umfassen, die ein Siliziumatom aufweisen, das an eine aromatische Gruppe gebunden ist.

**11.** Detektor nach Anspruch 9 oder 10, bei dem die Polymere, die sich wiederholende Einheiten vom Typ Siloxan umfassen, Einheiten umfassen, welche der nachfolgenden Formel (I) entsprechen:

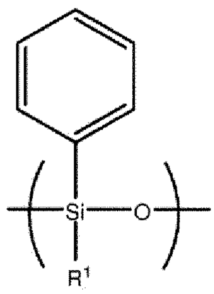

(I)

wobei $R^1$ eine Alkylgruppe darstellt, die 1 bis 10 Kohlenstoffatome umfasst, eine aromatische Kohlenwasserstoffgruppe, die 5 bis 10 Kohlenstoffatome umfasst, oder ein Wasserstoffatom, sowie gegebenenfalls sich wiederholende Einheiten, die der nachfolgenden Formel (II) entsprechen:

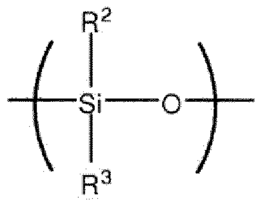

(II)

wobei $R^2$ und $R^3$, die identisch oder unterschiedlich sind, eine Alkylgruppe darstellen, die 1 bis 10 Kohlenstoffatome umfasst, eine aromatische Kohlenwasserstoffgruppe, die 5 bis 10 Kohlenstoffatome umfasst, oder ein Wasserstoffatom.

**12.** Detektor nach einem der Ansprüche 10 oder 11, bei dem die Polymere vernetzte Polymere sind.

**13.** Detektor nach Anspruch 12, bei dem die Polymere sich wiederholende Einheiten der nachfolgenden Formel (III) umfassen:

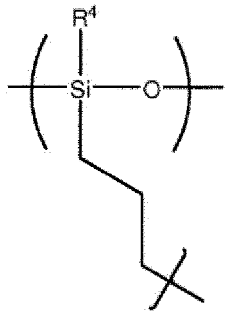

(III)

wobei $R^4$ eine Alkylgruppe darstellt, die 1 bis 10 Kohlenstoffatome umfasst, eine aromatische Kohlenwasserstoffgruppe, die 5 bis 10 Kohlenstoffatome umfasst, oder ein Wasserstoffatom.

**14.** Detektor nach Anpruch 9, bei dem das (Meth)acrylatmonomer einer der nachfolgenden Formeln (X) und (XI) entspricht:

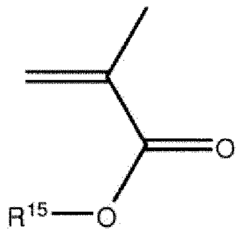

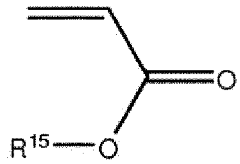

(X) (XI)

wobei $R^{15}$ eine aromatische Kohlenwasserstoffgruppe darstellt.

**15.** Detektor nach Anspruch 9, bei dem das Monomer, das wenigstens zwei polymerisierbare funktionelle Gruppen umfasst, ein Alkyl-di(meth)acrylat ist, das einer der nachfolgenden Formeln (XII) und (XIII) entspricht:

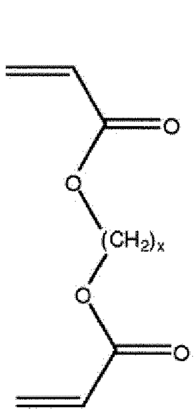

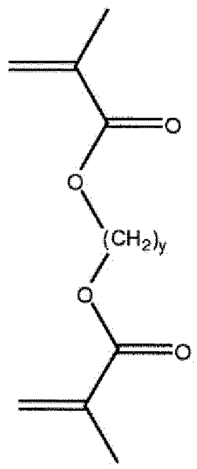

(XII) (XIII)

wobei x und y die Wiederholungszahl des in Klammern gesetzten Motivs darstellen, wobei x und y eine ganze Zahl zwischen 1 und 20 sein können.

**16.** Detektor nach Anspruch 9, bei dem die Polymermatrix des ersten Szintillators ein vernetztes Polymer umfasst, umfassend sich wiederholende Einheiten, die aus der Polymerisation wenigstens eines Monomers stammen, ausgewählt aus Styrol, Vinyltoluol, Phenylmethacrylat, Benzylmethacrylat, Methacrylat von 1-Naphthyl oder Methacrylat von 2-Naphthyl und wenigstens ein Monomer, das Träger von wenigstens zwei funktionellen Ethylengruppen ist, ausgewählt aus den Alkyl-di(meth)acrylaten, wie zum Beispiel die im Anspruch 15 definierten.

**17.** Detektor nach Anspruch 16, bei dem die Polymermatrix des ersten Szintillators ein Polymer umfasst, das sich wiederholende Einheiten umfasst, die aus der Polymerisation von Styrol, von Benzylmethacrylat und von Dimethylacrylat von 1,6-Hexandiyl stammen.

**18.** Detektor nach einem der Ansprüche 8 bis 17, bei dem die Fluoreszenzmoleküle, die in die Gestaltung des ersten Szintillators eingehen, eine Abnahmezeit von 1 bis 20 ns aufweisen, vorzugsweise von 1 bis 10 ns.

**19.** Detektor nach Anspruch 18, bei dem die Fluoreszenzmoleküle aus einer Mischung eines ersten Fluoreszenzmoleküls und eines zweiten Fluoreszenzmoleküls bestehen.

**20.** Detektor nach Anspruch 19, bei dem das erste Fluoreszenzmolekül derart ausgewählt ist, dass es ein Absorptionsspektrum aufweist, dessen maximale Absorptionsintensität zwischen 250 und 350 nm liegt.

**21.** Detektor nach Anspruch 19 oder 20, bei dem das zweite Fluoreszenzmolekül derart ausgewählt ist, dass es ein Absorptionsspektrum aufweist, welches dazu ausgelegt ist, das Emissionsspektrum des ersten Fluoreszenzmoleküls abzudecken, was anders ausgedrückt bedeutet, dass das zweite Fluoreszenzmolekül einerseits dazu ausgelegt ist, die Photonen mit Wellenlängen zu absorbieren, die zum Emissionsspektrum des ersten Fluoreszenzmoleküls gehören, und andererseits, im Anschluss an diese Absorption, Photonen derart zu emittieren, dass das Emissionsspektrum des zweiten Fluoreszenzmoleküls sich von 350 bis 650 nm erstreckt, mit einer maximalen Emissionsintensität, die zwischen 400 und 600 nm enthalten ist.

**22.** Detektor nach einem der Ansprüche 17 bis 21, bei dem das erste Fluoreszenzmolekül eine 2,5-Diphenyloxazonverbindung ist, wohingegen das zweite Fluoreszenzmolekül eine Bis-methylstyrylbenzolverbindung ist.

**23.** Detektor nach einem der Ansprüche 8 bis 22, bei dem die Polymermatrix des zweiten Szintillators umfasst:

- ein Polymer, umfassend sich wiederholende Einheiten, die aus der Polymerisation wenigstens eines Styrolmonomers stammen;
- ein Polymer, umfassend sich wiederholende Einheiten, die aus der Polymerisation wenigstens eines (Meth)acrylatmonomers stammen; und/oder
- ein vernetztes Polymer, umfassend Einheiten, die aus der Polymerisation wenigstens eines Styrolmonomers, wenigstens eines (Meth)acrylatmonomers und gegebenenfalls wenigstens eines Monomers stammen, umfassend wenigstens zwei polymerisierbare funktionelle Gruppen.

**24.** Detektor nach Anspruch 23, bei dem das (Meth)acrylatmonomer einer der nachfolgenden Formeln (X) und (XI) entspricht:

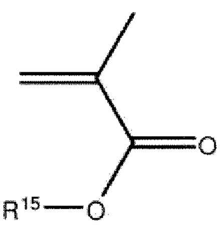

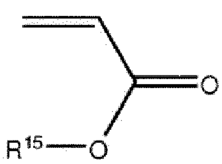

(X) (XI)

wobei $R^{15}$ eine aromatische Kohlenwasserstoffgruppe darstellt.

**25.** Detektor nach Anspruch 23, bei dem das Monomer, das wenigstens zwei polymerisierbare funktionelle Gruppen umfasst, ein Alkyl-di(meth)acrylat ist, das einer der nachfolgenden Formeln (XII) und (XIII) entspricht:

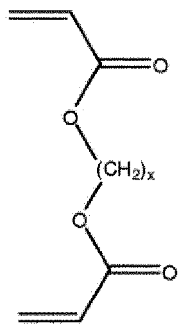
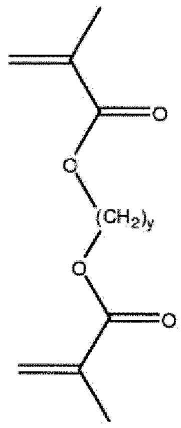

(XII) (XIII)

wobei x und y die Wiederholungsanzahl des in Klammern gesetzten Motivs darstellen, wobei x und y eine ganze Zahl von 1 bis 20 sein können.

**26.** Detektor nach Anspruch 23, bei dem die Polymermatrix des zweiten Szintillators ein Polymer umfasst, umfassend sich wiederholende Einheiten, die aus der Polymerisation wenigstens eines Monomers stammen, ausgewählt aus Styrol, Vinyltoluol, Phenylmethacrylat, Benzylmethacrylat, Methacrylat von 1-Naphthyl oder Methacrylat von 2-Naphthyl sowie wenigstens ein Monomer, das Träger von wenigstens zwei funktionellen Ethylengruppen ist, ausgewählt aus den Alkyl-di(meth)acrylaten wie zum Beipiel den in Anspruch 25 definierten.

**27.** Detektor nach Anspruch 26, bei dem die Polymermatrix des zweiten Szintillators ein Polymer umfasst, das sich wiederholende Einheiten umfasst, die aus der Polymerisation von Styrol, von Benzylmethacrylat und von Dimethylacrylat von 1,6-Hexandiyl stammen.

**28.** Detektor nach einem der Ansprüche 8 bis 27, bei dem die Fluoreszenzmoleküle, die in die Gestaltung des zweiten Szintillators eingehen, eine Abnahmezeit von 20 bis 500 ns aufweisen.

**29.** Detektor nach Anspruch 28, bei dem die Fluoreszenzmoleküle aus einer Mischung eines ersten Fluoreszenzmoleküls und eines zweiten Fluoreszenzmoleküls bestehen.

**30.** Detektor nach Anspruch 29, bei dem das erste Fluoreszenzmolekül derart ausgewählt ist, dass es ein Absorptionsspektrum aufweist, dessen maximale Absorptionsintensität zwischen 250 und 350 nm liegt.

**31.** Detektor nach Anspruch 29 oder 30, bei dem das zweite Fluoreszenzmolekül derart ausgewählt ist, dass es ein Absorptionsspektrum aufweist, welches dazu ausgelegt ist, das Emissionsspektrum des ersten Fluoreszenzmoleküls abzudecken, was anders ausgedrückt bedeutet, dass das zweite Fluoreszenzmolekül einerseits dazu ausgelegt ist, die Photonen mit Wellenlängen zu absorbieren, die zum Emissionsspektrum des ersten Fluoreszenzmoleküls gehören, und andererseits Photonen derart zu emittieren, dass das Emissionsspekturm des zweiten Fluoreszenzmoleküls sich von 350 bis 650 nm erstreckt, mit einer maximalen Emissionsintensität, die zwischen 400 und 500 nm enthalten ist.

**32.** Detektor nach einem der Ansprüche 29 bis 31, bei dem das erste Fluoreszenzmolekül eine Pyrenverbindung ist, wohingegen das zweite Fluoreszenzmolekül eine 9,10-Diphenylanthracenverbindung ist.

## Claims

**1.** Method for processing electrical signals from a phoswich scintillator comprising an upstream scintillator (1) and a downstream scintillator (2), **characterised in that** it comprises, for each electrical signal:

- digitisation of the electrical signal,
- determination of an amplitude A and an integral surface area S of the digitised electrical signal,

- calculation of a first data item $S_1$ and a second data item $S_2$ using the following respective equations:

$$S_1 = [\tau_1/(\tau_2-\tau_1)][A\ (\tau_2/\tau_0) - S],$$

and

$$S_2 = [\tau_2/(\tau_2-\tau_1)][S - A\ (\tau_1/\tau_0)],$$

where:

→ $\tau_1$ is a signal decay constant characteristic of particle detection in the upstream scintillator;
→ $\tau_2$ is a signal decay constant characteristic of particle detection in the downstream scintillator;
→ $\tau_0$ is an integration constant chosen for the measurement of the integral surface area S,

- display of the first and second data item $S_1$, $S_2$ in an orthonormal reference frame (S1, S2), the first data item $S_1$ being positioned along the axis S1 and the second data item $S_2$ being positioned along the axis S2 such that the first and second data items associated with the same electrical signal correspond to the same event,
- definition of a zone of interest of events (Z4) by selecting, from the events distributed in the reference frame (S1, S2), events which are contained in a calibration zone defined following the detection of β particles during a preliminary calibration step.

**2.** Method according to claim 1, wherein the step for defining the zone of interest is followed by a step (E5) for counting the events in the zone of interest.

**3.** Method according to claim 2, wherein a preliminary noise measurement corresponding to the detection of y particles from the ambient noise gives rise to a noise event count in the calibration zone and the noise event count is subtracted from the events counted in the zone of interest.

**4.** Scintillation detector comprising a phoswich scintillator and a processing circuit suitable for implementing the method for processing electrical signals according to any of claims 1 to 3.

**5.** Detector according to claim 4, wherein the phoswich scintillator comprises a first scintillator and a second scintillator each consisting of a polymeric material, the first scintillator and the second scintillator are in direct contact with each other without the use of a bonding layer.

**6.** Detector according to claim 5, wherein the first scintillator is an "upstream scintillator" and the second scintillator a "downstream scintillator" with reference to the direction of propagation of particles detected by the detector.

**7.** Detector according to any of claims 5 or 6, wherein the first scintillator and the second scintillator have a parallelepipedic shape or a cylindrical shape.

**8.** Detector according to any of claims 5 to 7, wherein the polymeric material consists of a polymeric matrix, wherein one or a plurality of fluorescent molecules are dispersed, which will make it possible to generate characteristic scintillation (i.e. light emission) of the absorption of a given radiation.

**9.** Detector according to claim 8, wherein the polymeric matrix of the first scintillator comprises:

- a polymer comprising repeat units derived from the polymerisation of at least one styrene monomer;
- a polymer comprising repeat units derived from the polymerisation of at least one (meth)acrylate monomer;
- a polymer comprising siloxane type repeat units; and/or
- a cross-linked polymer comprising units derived from the polymerisation of at least one styrene monomer, at least one (meth)acrylate monomer and optionally at least one monomer comprising at least two polymerisable functions.

**10.** Detector according to claim 9, wherein the polymers comprising siloxane type repeat units comprise at least some

of said repeat units having a silicon atom bound with an aromatic group.

**11.** Detector according to claim 9 or 10, wherein the polymers comprising siloxane type repeat units comprise units complying with the following formula (I):

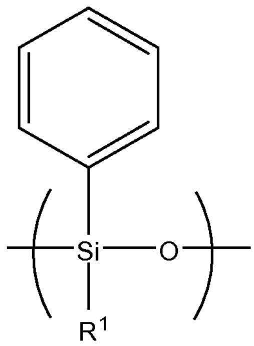

(I)

wherein $R^1$ represents an alkyl group comprising 1 to 10 carbon atoms, an aromatic hydrocarbon group comprising 5 to 10 carbon atoms or a hydrogen atom and optionally repeat units complying with the following formula (II):

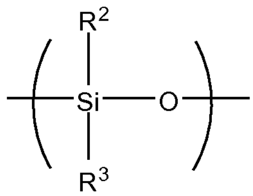

(II)

wherein $R^2$ and $R^3$, identical or different, represent an alkyl group comprising 1 to 10 carbon atoms, an aromatic hydrocarbon group comprising 5 to 10 carbon atoms or a hydrogen atom.

**12.** Detector according to any of claims 10 or 11, wherein the polymers are cross-linked polymers.

**13.** Detector according to claim 12, wherein the polymers comprise repeat units according to the following formula (III):

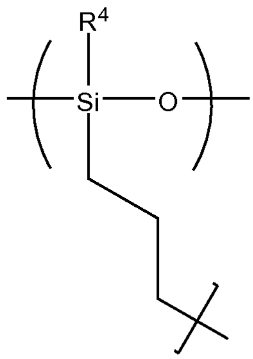

(III)

wherein $R^4$ represents an alkyl group comprising 1 to 10 carbon atoms, an aromatic hydrocarbon group comprising 5 to 10 carbon atoms or a hydrogen atom.

**14.** Detector according to claim 9, wherein the (meth)acrylate monomer complies with any of the following formulas (X) and (XI) :

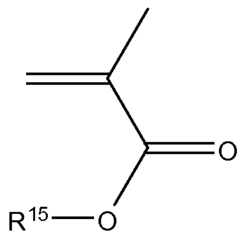

(X)

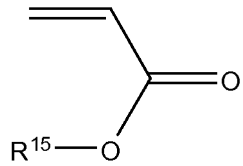

(XI)

wherein $R^{15}$ represents an aromatic hydrocarbon group.

**15.** Detector according to claim 9, wherein the monomer comprising at least two polymerisable functions is an alkyl di(meth)acrylate complying with any of the following formulas (XII) and (XIII) :

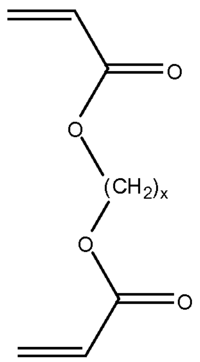

(XII)

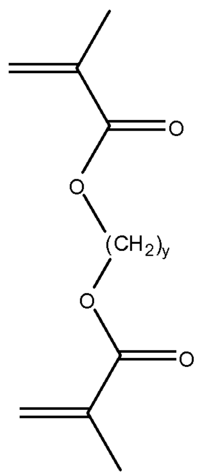

(XIII)

wherein x and y represent the number of repeats of the unit between brackets, x and y optionally being an integer ranging from 1 to 20.

**16.** Detector according to claim 9, wherein the polymeric matrix of the first scintillator comprises a cross-linked polymer comprising repeat units derived from the polymerisation of at least one monomer chosen from styrene, vinyltoluene, phenyl methacrylate, benzyl methacrylate, 1-naphthyl methacrylate or 2-naphthyl methacrylate and at least one monomer bearing at least two ethylene functions chosen from alkyl di(meth)acrylates, such as those defined in claim 15.

**17.** Detector according to claim 16, wherein the polymeric matrix of the first scintillator comprises a polymer comprising repeat units derived from the polymerisation of styrene, benzyl methacrylate and 1,6-hexanediyl dimethacrylate.

**18.** Detector according to any of claims 8 to 17, wherein the fluorescent molecules used in the composition of the first scintillator have a decay time ranging from 1 to 20 ns, preferably from 1 to 10 ns.

**19.** Detector according to claim 18, wherein the fluorescent molecules consist of a first fluorescent molecule and a second fluorescent molecule.

**20.** Detector according to claim 19, wherein the first fluorescent molecule is chosen so as to have an absorption spectrum, wherein the peak absorption intensity is situated between 250 and 350 nm.

**21.** Detector according to claim 19 or 20, wherein the second fluorescent molecule is chosen so as to have an absorption spectrum suitable for covering the emission spectrum of the first fluorescent molecule, meaning, in other words, that the second fluorescent molecule is suitable, on one hand, for absorbing photons having wavelengths belonging

to the emission spectrum of said first fluorescent molecule, and, on the other, following this absorption, for emitting photons, such that the emission spectrum of said second fluorescent molecule ranges from 350 to 650 nm with a peak emission intensity between 400 and 600 nm.

**22.** Detector according to any of claims 17 to 21, wherein the first fluorescent molecule is a 2,5-diphenyloxazone compound, whereas the second fluorescent molecule is a bis-methylstyrylbenzene compound.

**23.** Detector according to any of claims 8 to 22, wherein the polymeric matrix of the second scintillator comprises:

- a polymer comprising repeat units derived from the polymerisation of at least one styrene monomer;
- a polymer comprising repeat units derived from the polymerisation of at least one (meth)acrylate monomer; and/or
- a cross-linked polymer comprising units derived from the polymerisation of at least one styrene monomer, at least one (meth)acrylate monomer and optionally at least one monomer comprising at least two polymerisable functions.

**24.** Detector according to claim 23, wherein the (meth)acrylate monomer complies with any of the following formulas (X) and (XI) :

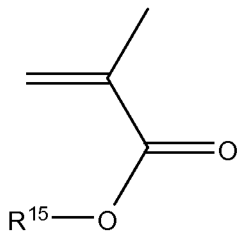
(X)

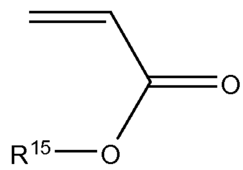
(XI)

wherein $R^{15}$ represents an aromatic hydrocarbon group.

**25.** Detector according to claim 23, wherein the monomer comprising at least two polymerisable functions is an alkyl di(meth)acrylate complying with any of the following formulas (XII) and (XIII) :

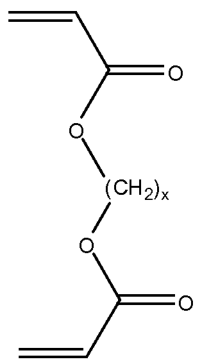
(XII)

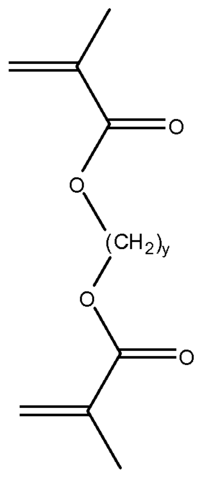
(XIII)

wherein x and y represent the number of repeats of the unit between brackets, x and y optionally being an integer ranging from 1 to 20.

**26.** Detector according to claim 23, wherein the polymeric matrix of the second scintillator comprises a polymer comprising repeat units derived from the polymerisation of at least one monomer chosen from styrene, vinyltoluene,

phenyl methacrylate, benzyl methacrylate, 1-naphthyl methacrylate or 2-naphthyl methacrylate and at least one monomer bearing at least two ethylene functions chosen from alkyl di(meth)acrylates, such as those defined in claim 25.

**27.** Detector according to claim 26, wherein the polymeric matrix of the second scintillator comprises a polymer comprising repeat units derived from the polymerisation of styrene, benzyl methacrylate and 1,6-hexanediyl dimethacrylate.

**28.** Detector according to any of claims 8 to 27, wherein the fluorescent molecules used in the composition of the second scintillator have a decay time ranging from 20 to 500 ns.

**29.** Detector according to claim 28, wherein the fluorescent molecules consist of a mixture of a first fluorescent molecule and a second fluorescent molecule.

**30.** Detector according to claim 29, wherein the first fluorescent molecule is chosen so as to have an absorption spectrum, wherein the peak absorption intensity is situated between 250 and 350 nm.

**31.** Detector according to claim 29 or 30, wherein the second fluorescent molecule is chosen so as to have an absorption spectrum suitable for covering the emission spectrum of the first fluorescent molecule, meaning, in other words, that the second fluorescent molecule is suitable, on one hand, for absorbing photons having wavelengths belonging to the emission spectrum of said first fluorescent molecule, and, on the other, for emitting photons, such that the emission spectrum of said second fluorescent molecule ranges from 350 to 650 nm with a peak emission intensity between 400 and 500 nm.

**32.** Detector according to any of claims 29 to 31, wherein the first fluorescent molecule is a pyrene compound, whereas the second fluorescent molecule is a 9,10-diphenylanthracene compound.

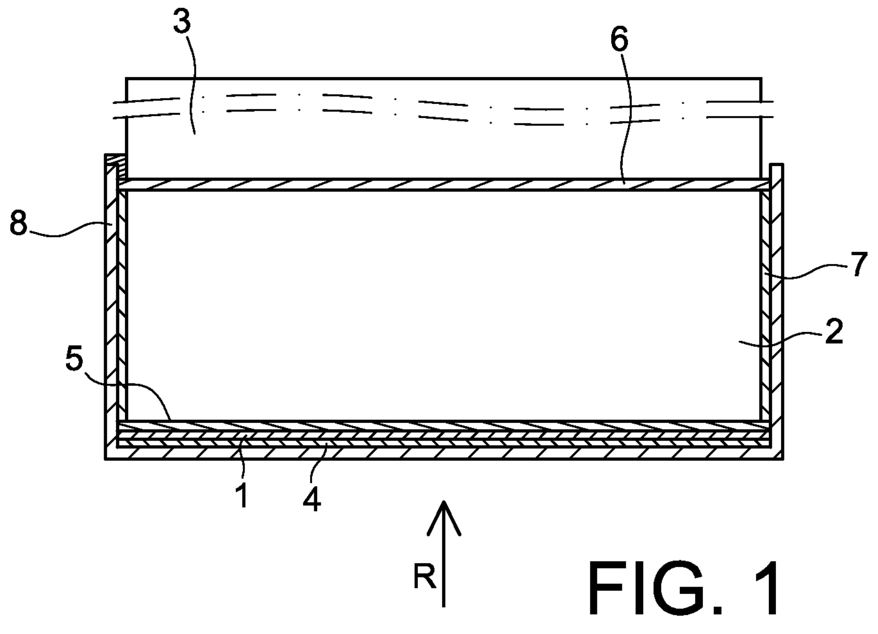


FIG. 1

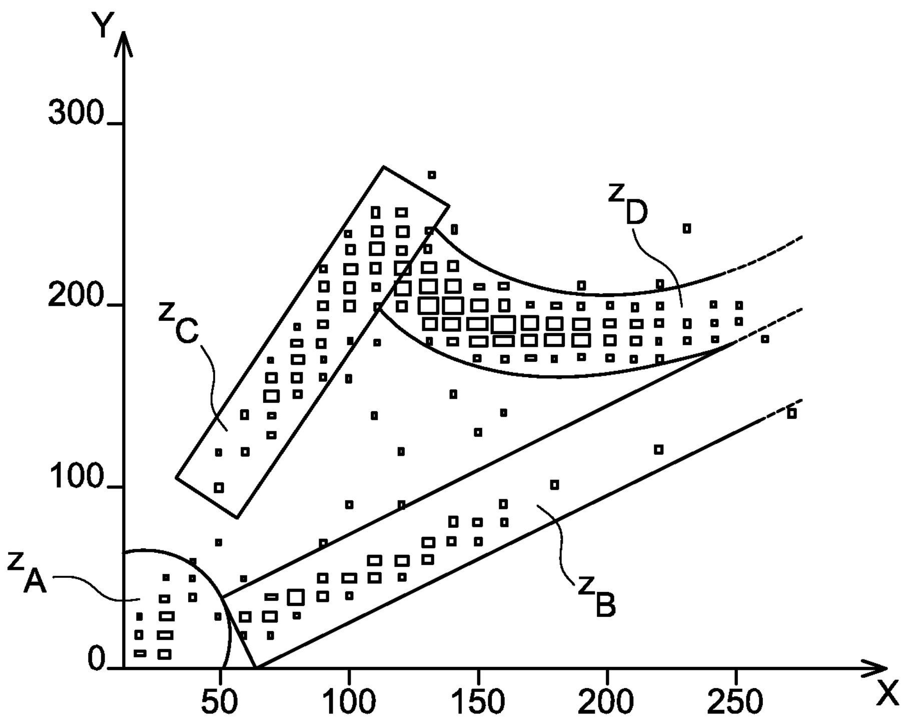


FIG. 2

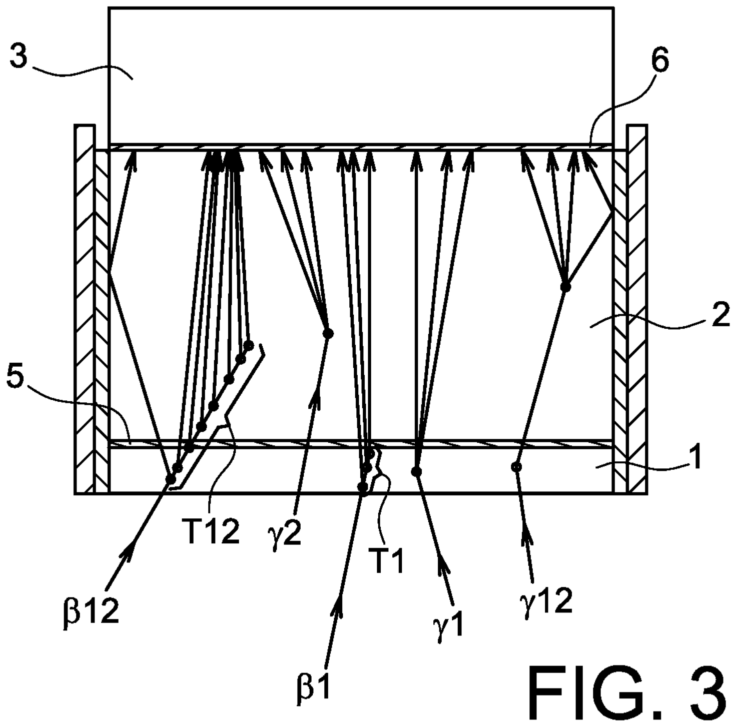


FIG. 3

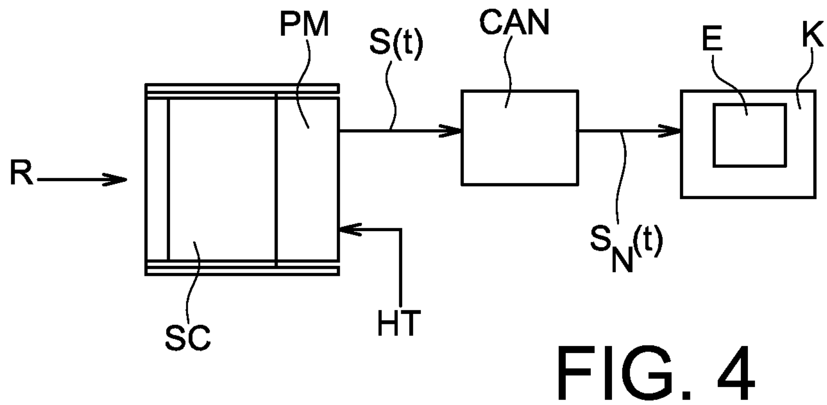


FIG. 4

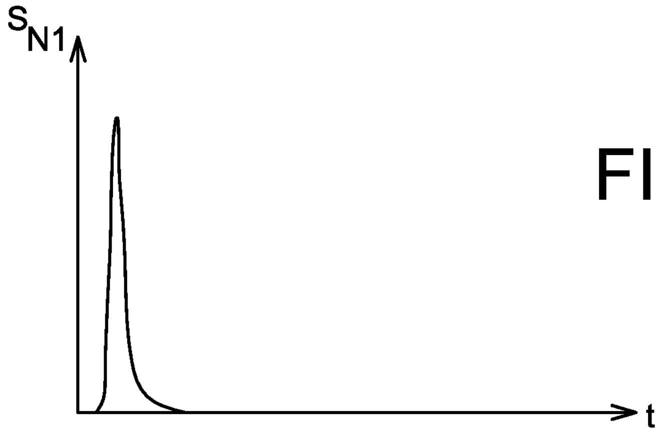


FIG. 5A

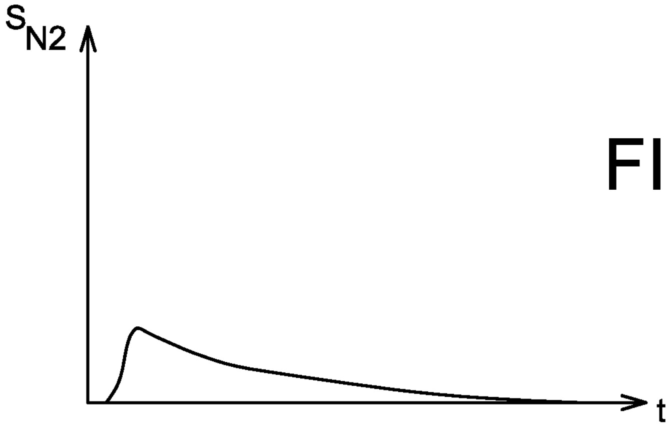


FIG. 5B

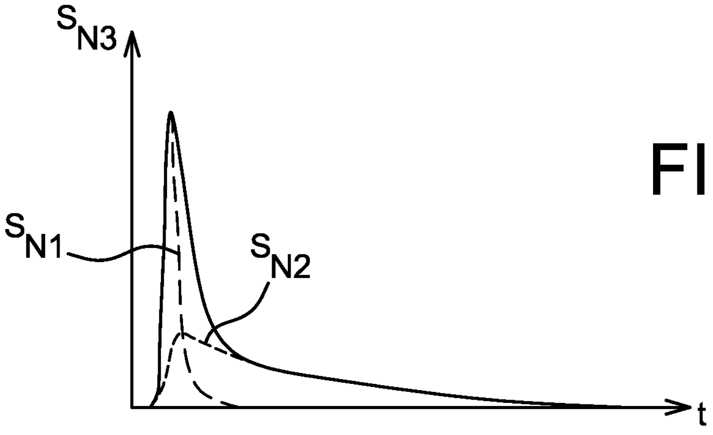


FIG. 5C

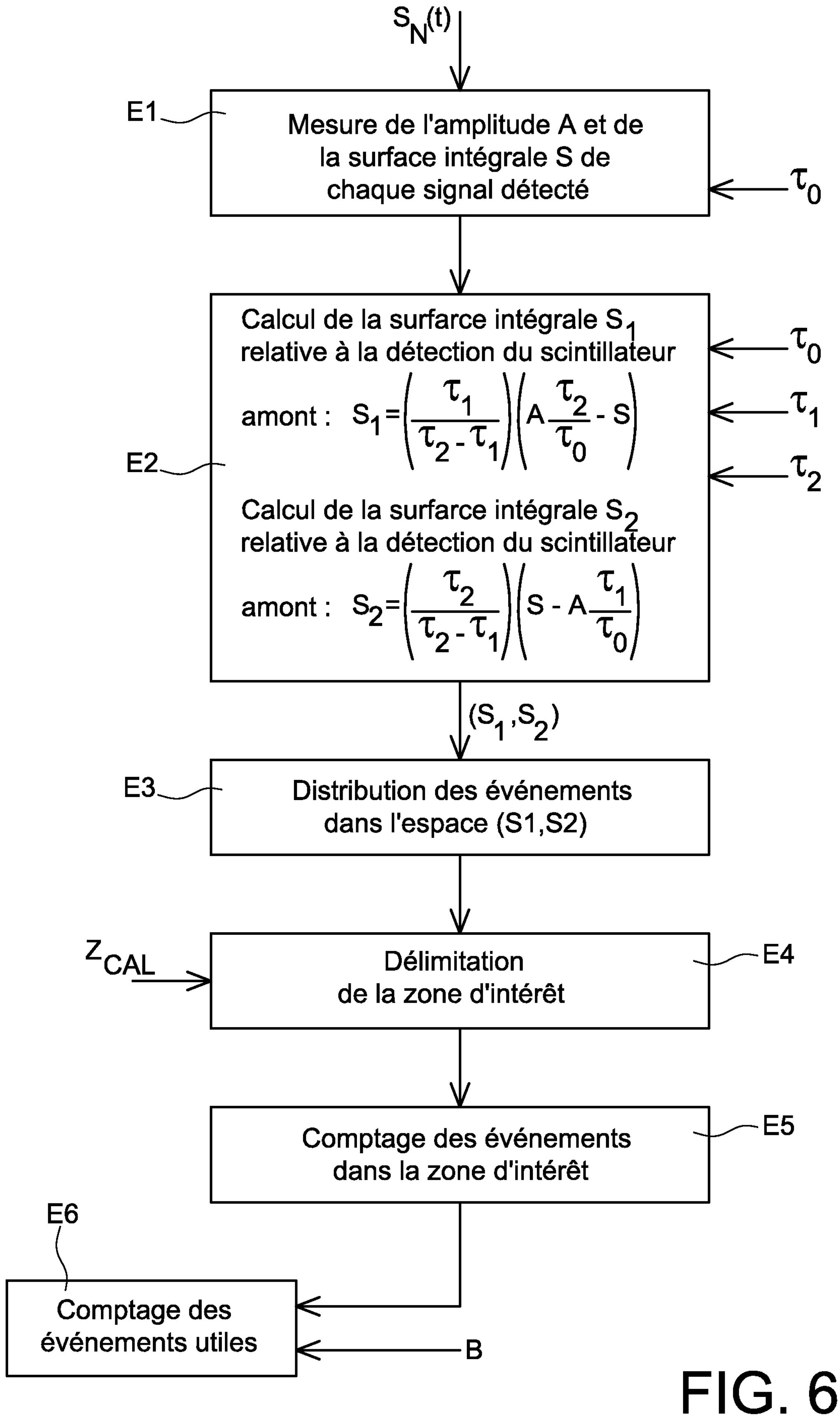

$S_N(t)$
E1
Mesure de l'amplitude A et de la surface intégrale S de chaque signal détecté
$\tau_0$
E2
Calcul de la surfarce intégrale $S_1$ relative à la détection du scintillateur amont : $S_1 = \left(\frac{\tau_1}{\tau_2 - \tau_1}\right)\left(A\frac{\tau_2}{\tau_0} - S\right)$
Calcul de la surfarce intégrale $S_2$ relative à la détection du scintillateur amont : $S_2 = \left(\frac{\tau_2}{\tau_2 - \tau_1}\right)\left(S - A\frac{\tau_1}{\tau_0}\right)$
$\tau_0$
$\tau_1$
$\tau_2$
$(S_1, S_2)$
E3
Distribution des événements dans l'espace (S1,S2)
$Z_{CAL}$
Délimitation de la zone d'intérêt
E4
Comptage des événements dans la zone d'intérêt
E5
E6
Comptage des événements utiles
B


FIG. 6

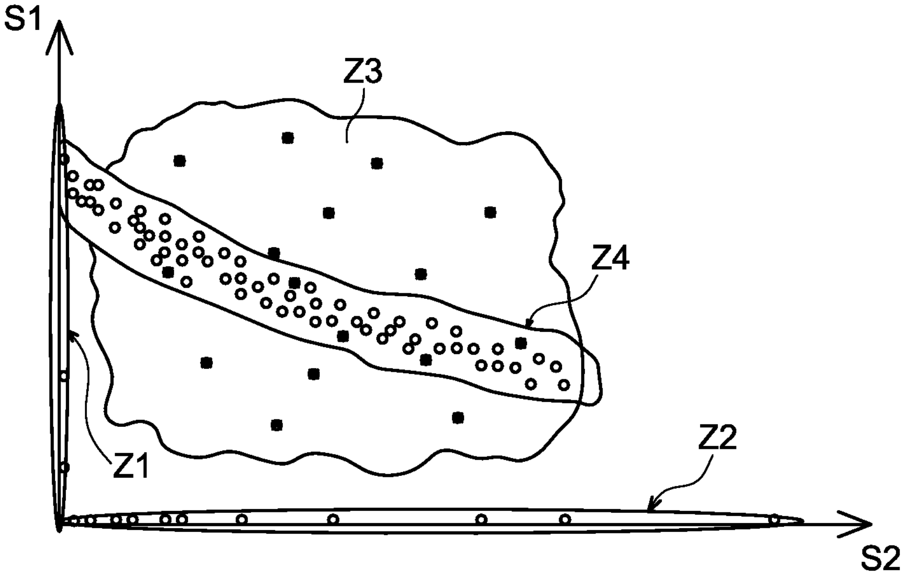


FIG. 7

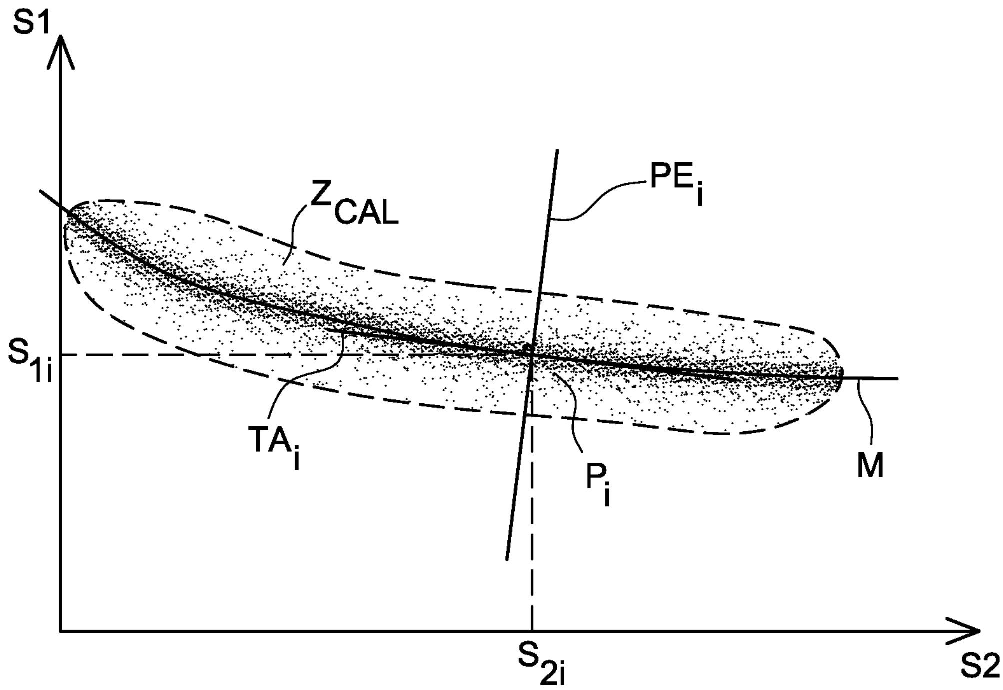


FIG. 8

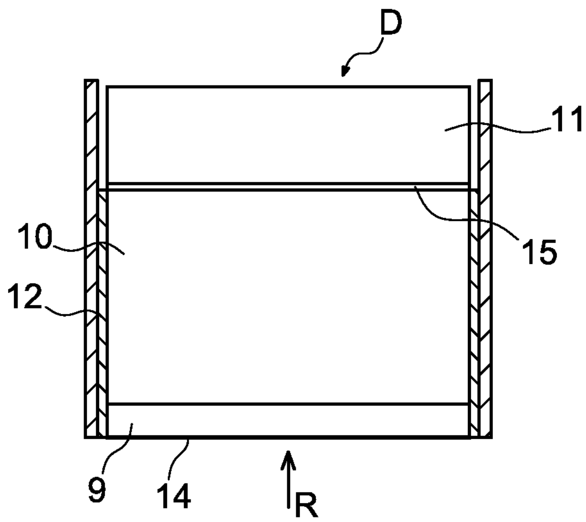


FIG. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 5514870 A


### Littérature non-brevet citée dans la description


- **YOUSEFI S. et al.** A wavelet-based pulse shape discrimination method for simultaneous beta and gamma spectroscopy. *Nuclear Instruments and Methods in Physics Research,* 2009, vol. 559 (1), 66-73